# EUROPEAN PATENT APPLICATION

(11) **EP 1 816 831 A1**
(43) Date of publication of application: **08.08.2007**
(21) Application number: 06022866.5
(22) Date of filing: 02.11.2006
(51) Int. Cl.: H04M 1/253, H04M 7/12, H04M 3/56, H04L 12/66, H04L 29/06

(54) **Computing device supporting bridging between a packet switched network and the public switched telephone network**

(30) Priority: 07.02.2006 US 348814
(71) Applicant: Broadcom Corporation, Irvine, CA 92617 (US)
(72) Inventor: Bennett, James D., 92672 San Clemente CA (US); Karaoguz, Jeyhan, 92606 Irvine CA (US)
(74) Representative: Jehle, Volker Armin

(57) **Abstract**

A bridging computing device includes processing circuitry communicatively coupled to a user interface, a Public Switched Telephone Network (PSTN) interface, a packet data network interface. To service an incoming call, the processing circuitry obtains and executes bridging instructions that establish a pathway between the PSTN and packet data network interfaces. With such pathway, a call between a PSTN telephony device and an Internet telephony device can be established and maintained via the bridging computing device. Call conferences may also be set up via the bridging computing device, e.g., between pluralities of Internet telephony devices with or without the participation of a PSTN telephony device. Calls may be initiated by a PSTN telephony device to an Internet telephony device, or by an Internet telephony device to a PSTN telephony device.

## Description

### CROSS REFERENCES TO RELATED APPLICATIONS

This application is related to the following co-pending applications:
1. Utility Application Serial No. xx/xxx,xxx, filed on even date herewith, and entitled "TELEPHONE SUPPORTING BRIDGING BETWEEN A PACKET SWITCHED NETWORK AND THE PUBLIC SWITCHED TELEPHONE NETWORK";
2. Utility Application Serial No. xx/xxx,xxx, filed on even date herewith, and entitled "TELEPHONE SUPPORTING SELECTIVE LOCAL CALL TERMINATION AND CALL BRIDGING";
3. Utility Application Serial No. xx/xxx,xxx, filed on even date herewith, and entitled "COMPUTING DEVICE SUPPORTING SELECTIVE LOCAL CALL TERMINATION AND CALL BRIDGING";
4. Utility Application Serial No. xx/xxx,xxx, filed on even date herewith, and entitled "SET TOP BOX SUPPORTING BRIDGING BETWEEN A PACKET SWITCHED NETWORK AND THE PUBLIC SWITCHED TELEPHONE NETWORK"; and
5. Utility Application Serial No. xx/xxx,xxx, filed on even date herewith, and entitled "SET TOP BOX SUPPORTING SELECTIVE LOCAL CALL TERMINATION AND CALL BRIDGING".

### BACKGROUND OF THE INVENTION

### 1. TECHNICAL FIELD OF THE INVENTION

This invention relates generally to communication systems and more particularly to computing devices supporting packet data and circuit switched communications.

### 2. DESCRIPTION OF RELATED ART

Voice telephony has been known for many years. Initially, voice telephony was supported by dedicated conductors between telephones. Then, voice telephony was enabled by operators manually switching connectors to create and tear down circuits between telephones. As technology advanced, mechanical components performed the switching operations to create and tear down circuits between telephones. With advancing technology, computers and semiconductor components replaced the mechanical components to perform circuit switching duties. Networks created using this circuit-switched technology are generally known as the Public Switched Telephone Network (PSTN). Generally, the PSTN provides a circuit-switched, time-divided connection between telephones.

Packet data communications, such as those supported by the Internet, differ from circuit-switched communications. With packet data communications, a source device forms a data packet, transmits the data packet to a packet data network, and based upon a destination address, e.g., Internet Protocol (IP) address of the data packet, the packet data network passes the data packet to a destination device. As the Internet and other packet data networks grew in popularity, packet switched voice telephony was developed. One common type of packet switched voice telephony is Voice over Internet Protocol (VoIP) telephony. When VoIP telephony was first introduced, the data packet transmission latency of the Internet and of other servicing networks caused the quality of VoIP telephony to be significantly worse than that of PSTN telephony. Over time, packet data transmission latency of the Internet and of other servicing packet data networks has decreased. Now, VoIP telephony provides service quality equal to or better than VoIP telephony in many cases.

Recently developed VoIP telephony applications enable computer users to establish non-toll VoIP telephone calls across the Internet. Compared to PSTN telephony VoIP telephony of this type is significantly less expensive, particularly for overseas calls. However, only a limited number of people have a computer upon which this VoIP telephony application may be loaded and have Internet access of a quality that will support the VoIP telephony application.

In order to gain some advantages of VoIP telephony but still service consumers having PSTN telephones, VoIP telephony service providers typically deploy VoIP gateways. The VoIP gateways bridge communications between the PSTN (PSTN telephony call) and the Internet (VoIP telephony call). VoIP telephony service providers typically extract a toll for servicing a call via the VoIP gateway bridge, thus destroying in part the low cost attractiveness of VoIP telephony. Thus, a need exists for systems and methods of operations that overcome the shortcomings of these prior telephony systems.

### BRIEF SUMMARY OF THE INVENTION

The present invention is directed to apparatus and methods of operation that are further described in the following Brief Description of the Drawings, the Detailed Description of the Drawings, and the Claims.

According to an aspect of the invention, a computing device is provided for use in bridging a first call between a first telephony device and a second telephony device and a second call from a third telephony device, the computing device comprising:
processing circuitry that operates in both a call bridging mode and a call end-point mode;
a user interface communicatively coupled to the processing circuitry;
a first interface communicatively coupling the processing circuitry to the first telephony device via the Public Switched Telephone Network (PSTN) and pursuant to a first voice format;
a second interface communicatively coupling the processing circuitry to the second telephony device via an Internet network and pursuant to a second voice format;
the processing circuitry, in the call end-point mode, supports the second call by maintaining a first communication pathway between the user interface and the third telephony device; and
the processing circuitry, in the call bridging mode, provides a second communication pathway between the first telephony device and the second telephony device by translating first call information of the first call received via the first interface to the second voice format for delivery to the second telephony device, and translating second call information of the first call received via the second interface to the first voice format for delivery first telephony device.

Advantageously, the computing device further comprises memory that stores bridging instructions, and wherein the processing circuitry retrieves and executes the bridging instructions from the memory to support the second communication pathway.

Advantageously, the user interface comprises:
an audio interface;
a mouse interface; and
a keyboard interface.

Advantageously, the user interface comprises a headset.

Advantageously, the first voice format comprises analog voice signals.

Advantageously, the first voice format comprises a cellular telephony format.

Advantageously, the computing device further comprises a user interface unit and a base unit, and wherein the base unit comprising the processing circuitry.

According to an aspect of the invention, in a telephony infrastructure supporting a call between a first telephony device and a second telephony device, a computing device is provided comprising:
bridging circuitry;
a first interface communicatively coupling the bridging circuitry to the first telephony device via to a public switched telephone network and pursuant to a first voice format;
a second interface communicatively coupling the bridging circuitry to the second telephony device via an Internet network and pursuant to a second voice format; and
the bridging circuitry provides a call pathway between the first telephony device and the second telephony device by translating first call information received via the first interface to the second voice format for delivery to the second telephony device, and by translating second call information received via the second interface to the first voice format for delivery to the first telephony device.

Advantageously, the computing device further comprises memory that stores bridging instructions, and the bridging circuitry retrieves and executes the bridging instructions from the memory.

Advantageously, the first voice format comprises analog voice signals.

Advantageously, the first voice format comprises a cellular telephony format.

Advantageously, the bridging circuitry communicatively couples with the second telephony device using a protocol stack.

Advantageously, the call information received via the second interface comprising call packets, and the translating of the second call information received via the second interface comprising reassembling the call packets.

Advantageously, the bridging circuitry expands the call pathway between the first telephony device and the second telephony device to include a third telephony device to establish a three way call.

According to an aspect of the invention, a computing device comprises:
a user interface;
processing circuitry communicatively coupled to the user interface;
a first interface communicatively coupling the processing circuitry to the Public Switched Telephone Network (PSTN);
a second interface communicatively coupling the processing circuitry to an Internet network; and
the processing circuitry selectively bridges calls between the first interface and the second interface.

Advantageously, the user interface supports voice communications.

Advantageously, the computing device further comprises a local memory that stores bridging instructions, and, in selectively bridging the incoming call, the processing circuitry retrieves and executes the bridging instructions from the local memory.

Advantageously, the selective bridging of the processing circuitry comprising generating digital call data from received analog call data.

Advantageously, the selective bridging of the processing circuitry further comprising generating analog call data from received digital call data.

Advantageously, the selective bridging of the processing circuitry comprising generating cellular call data from Internet call data packets.

Advantageously, the selective bridging of the processing circuitry is performed at least in part pursuant to at least a portion of a protocol stack.

According to an aspect of the invention, in a telephony infrastructure supporting a call between a first telephony device and a second telephony device, a method performed by a computing device having a first interface and a second interface is provided, the first interface communicatively coupled to a public switched telephone network, the second interface communicatively coupled to an Internet network, the method comprising:
receiving first voice signals in a first voice format generated by the first telephony device via the first interface;
receiving second voice signals in a second voice format generated by the second telephony device via the second interface;
translating the first voice signals received from the first voice format to the second voice format;
translating the second voice signals received from the second voice format to the first voice format;
delivering the first voice signals in the second voice format to the second telephony device via the second interface; and
delivering the second voice signals in the first voice format to the first telephony device.

Advantageously, translating of the first voice signals and second voice signals together comprising a bridge between the public switched telephone network and the Internet network.

Advantageously, the first voice format comprises an analog format.

Advantageously, the first voice format comprises a cellular format.

Advantageously, the second voice format is defined pursuant to a voice over the Internet network protocol.

Other features and advantages of the present invention will become apparent from the following detailed description of the invention made with reference to the accompanying drawings.

### BRIEF DESCRIPTION OF THE SEVERAL VIEWS OF THE DRAWINGS

FIG. 1 is a diagram illustrating a communication system that includes a telephony bridging computing device constructed in accordance with an embodiment of the present invention;
FIG. 2 is a diagram illustrating a communication system that includes a telephony bridging computing device constructed in accordance with another embodiment of the present invention;
FIG. 3 is a diagram illustrating a communication system that includes a telephony bridging computing device constructed in accordance with yet another embodiment of the present invention;
FIG. 4 is a diagram illustrating a communication system that includes a telephony bridging computing device constructed in accordance with a further embodiment of the present invention;
FIG. 5 is a diagram illustrating a communication system that includes a telephony bridging computing device constructed in accordance with still another embodiment of the present invention;
FIG. 6 is a block diagram illustrating a telephony bridging computing device constructed in accordance with the embodiments of FIGs. 1, 2, 3 and/or 4 of the present invention;
FIG. 7 is a block diagram illustrating a telephony bridging computing device constructed in accordance with the embodiment of FIG. 5 of the present invention;
FIG. 8 is a block diagram illustrating another telephony bridging computing device constructed in accordance with the embodiments of FIGs. 1, 2, 3 and/or 4 of the present invention;
FIG. 9 is a flow chart illustrating operation of a telephony bridging computing device constructed in accordance with an embodiment of the present invention;
FIG. 10 is a flow chart illustrating PSTN to VoIP bridging operations of a telephony bridging computing device constructed in accordance with an embodiment of the present invention;
FIG. 11 is a flow chart illustrating VoIP to PSTN bridging operations of a telephony bridging computing device constructed in accordance with an embodiment of the present invention;
FIG. 12 is a flow chart illustrating VoIP to VoIP bridging operations of a telephony bridging computing device constructed in accordance with an embodiment of the present invention;
FIG. 13 is a flow chart illustrating local user interface bridging setup operations of a telephony bridging computing device constructed in accordance with an embodiment of the present invention;
FIG. 14 is a flow chart illustrating remote user terminal bridging setup operations of a telephony bridging computing device constructed in accordance with an embodiment of the present invention;
FIG. 15 is a flow chart illustrating tracking server setup/update operations in accordance with an embodiment of the present invention;
FIG. 16 is a flow chart illustrating tracking server access operations in accordance with an embodiment of the present invention;
FIG. 17 is a block diagram illustrating protocol stack operations for PSTN/VoIP bridging operations in accordance with an embodiment of the present invention;
FIG. 18 is a block diagram illustrating protocol stack operations for PSTN/VoIP bridging operations across a DSL link in accordance with an embodiment of the present invention;
FIG. 19 is a block diagram illustrating protocol stack operations for PSTN/VoIP bridging operations across a DOCSIS cable network link in accordance with an embodiment of the present invention;
FIG. 20 is a flow chart illustrating message server operations in accordance with an embodiment of the present invention; and
FIG. 21 is a flow chart illustrating call setup operations in accordance with an embodiment of the present invention.

### DETAILED DESCRIPTION OF THE INVENTION

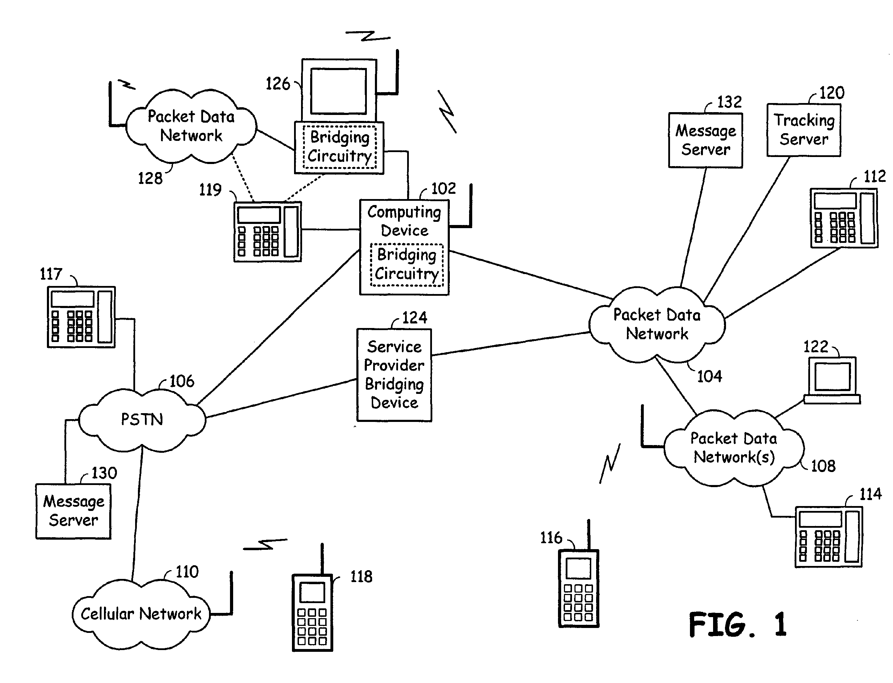

FIG. 1 is a diagram illustrating a communication system that includes a telephony bridging computing device constructed in accordance with an embodiment of the present invention. The telephony bridging computing device 102 couples to both the Public Switched Telephone Network (PSTN) 106 and to a packet data network 104, such as Internet. The telephony bridging computer device 102 will be referred to hereinafter interchangeably as one or more of: (1) bridging computing device; (2) computing device; (3) bridging computer; (4) computer. The bridging computer 102 accesses the PSTN 106 using a Plain Old Telephone System (POTS) interface, a Digital Subscriber Line (DSL) interface, an Integrated Services Digital Network (ISDN) interface, or another interface to the PSTN 106 via wired means. Generally, the PSTN refers to any network that supports an interface that operates according to PSTN operating standards, including cellular networks and land-line networks. Further, the packet data networks 104 and 108 refer to any networks that support packet data telephony, e.g., VoIP telephony, including both wireless and wired networks

The bridging computer 102 connects to a packet data network 104 via a wired connection to an Internet Service Provider (ISP), via a Wide Area Network (WAN), via a Local Area Network (LAN), or via another servicing network. The bridging computer 102 may be located within a home, an office, or another location wherein a computer would conventionally be located. Packet data network(s) 108 communicatively couple to packet data network 104. VoIP telephone 112, tracking server 120, computer 122, and message server 132 couple to packet data network 104. Wireless Voice over Internet Protocol (VoIP) terminal 116 and wired VoIP telephone 114 communicatively couple to packet data network(s) 108. The packet data network(s) 108 may be one or more of a WAN, a LAN, a Worldwide Interoperability for Microwave Access (WiMAX) network, one or more Wireless Local Area Networks (WLANs), or another type of packet data network. Generally, each of the VoIP telephone 112 and 114 as well as wireless VoIP terminal 116 and computer 122 support VoIP telephony. Bridging computer 102 may communicate with any of the VoIP telephones 112 and 114, VoIP terminal 116, and computer 122 via the packet data network 104 and the packet data network(s) 108.

Computer 126 couples to bridging computer 102 via wired and/or wireless coupling. Computer 126 couples to packet data network 128 via wired and/or wireless coupling 128. Packet data network 128 wired and/or wirelessly couples to the packet data network directly or indirectly. The bridging computer 102, computer 126, and packet data network 128 may service a premises such as a home, an office, or another client setting. Computer 126 may include bridging circuitry (as does bridging computer 102) and may cooperate with the bridging computer 102 in bridging calls between the packet data network 104 and the PSTN 106.

PSTN telephone 117 couples to the PSTN 106. Cellular network 110 couples to PSTN 106 and supports cellular telephone 118. Message server 130 couples to PSTN 106. Bridging computer 102 may establish a PSTN telephone call with PSTN telephone 117 via the PSTN 106. Bridging computer 102 may establish a PSTN telephone call with cellular telephone 118 via the PSTN 106 and the cellular network 110. The cellular network 110, in other embodiments, has direct connectivity with the packet data network 104 and/or the packet data networks 108 and supports VoIP telephony.

Service provider bridging device 124 couples between the packet data network 104 and to the PSTN 106. The service provider bridging device 124 may be a VoIP gateway or another type of device operable to bridge calls between a VoIP telephony format and a PSTN telephony format. The service provider bridging device 124 may perform additional functions as well, such as billing, VoIP number data base functions, call setup, and VoIP subscriber services, among others.

Generally, according to the present invention, bridging computer 102 is operable to setup and/or bridge telephone calls between the packet data network 104 and the PSTN 106 based upon telephony bridging instructions. The bridging computer 102 and, optionally the computer 126 include(s) bridging circuitry. While the bridging computer 102 controls bridging and the setup of bridging operations, computer 126 may assist in the bridging setup and bridging operations according to embodiments of the present invention.

In bridging calls between the PSTN 106 and the packet data network 104, the bridging computer 102 reformats calls between a PSTN telephony format (circuit switched) and a VoIP telephony format (VoIP data packets). The telephony bridging instructions may be locally generated and stored. Alternately, some or all of the telephony bridging instructions may be remotely generated and stored. Telephony bridging instructions may be remotely stored by computer 126, by tracking server 120, or by another device communicatively coupled to the bridging computer 102. The tracking server 120 or computer 126 may assist in the tracking of the location(s) of particular users/voice terminal(s). Thus, the bridging computer 102 may communicate with the tracking server 120 and/or the computer 126 to obtain some or all of the telephony bridging instructions.

In one operation according to the present invention, bridging computer 102 receives an incoming PSTN call from the PSTN 106. Such incoming PSTN call may originate from cellular terminal 118 or PSTN telephone 117, for example. The PSTN call is incoming and directed to a PSTN telephone number respective to bridging computer 102. Alternately, the PSTN call may be directed to a voice terminal 119 communicatively coupled to the bridging computer 102 (or to the computer 126 or the packet data network 128). The PSTN call may also include a Calling Line Identifier (CLID) associated with a calling PSTN telephone 117 or 118. In response to the incoming PSTN telephone call, bridging computer 102 checks for telephony bridging instructions for the call. Depending on its setup configuration, the bridging computer 102 searches for such telephony bridging instructions locally, at the local computer 126, and/or at the tracking server 120. In some operations, the bridging computer 102 searches more than one location for the telephony bridging instructions. In addition, telephony bridging instructions may be passed to the bridging computer 102 as part of the incoming PSTN telephone call either via a bridging identifier embedded within the CLID or within any another digital signaling supported by the PSTN 106. In other installations, the bridging computer 102 may couple directly to the cellular network 110 and bridge calls between the cellular network 110 and packet data network 104 (or 108).

In another operation, the bridging computer 102 receives an incoming VoIP call via the packet data network 104. Such incoming VoIP call may originate from VoIP terminal 112, VoIP terminal 114, VoIP terminal 116, or computer 122, for example. The VoIP call is incoming and directed to an Internet Protocol (IP) address respective to bridging computer 102 (or terminal 119). The VoIP call includes a source IP address associated with a calling VoIP terminal. In response to the incoming VoIP call, bridging computer 102 checks for telephony bridging instructions for the call. Depending on its setup configuration, the bridging computer 102 searches for telephony bridging instructions locally, at a local computer, e.g., computer 126, and/or at the tracking server 120. In response to the incoming VoIP call, bridging computer 102 checks for telephony bridging instructions for the VoIP call. Further, telephony bridging instructions for the VoIP call may be passed to the bridging computer 102 as part of an incoming VoIP telephone call either via a bridging identifier embedded within one or more incoming packets or within any another digital signaling supported by the Packet Data Network 104.

The telephony bridging instructions obtained by bridging computer 102 are employed by the bridging computer 102 either to bridge the telephone call from the PSTN 106 to the packet data network 104 or to terminate the incoming PSTN telephone call. When terminating an incoming call (either VoIP or PSTN), bridging computer 102 provides an alert signal to a user, e.g., ring tone, and enables the user to terminate the call in a conventional manner. Alternatively, the bridging computer 102 forwards the incoming call to voice mail. No matter whether the incoming call is incoming via the PSTN 106 or the packet data network 104, the bridging computer 102 may be configured to respond by retrieving the bridging instructions (bridging or forwarding) in any or all of the following: 1) local memory; 2) one or more remote servers; 3) one or more PSTN supported packets delivered in association with a PSTN call, e.g., via CLID that is "highjacked" to contain bridging instructions or otherwise used to extract a bridging or forwarding instructions or via any other type of digital packet or packets currently supported or that might be supported by PSTN in the future; and 4) one or more packet data network packets, e.g., to find bridging and/or routing instructions/requests. The remote server(s) 120 may be checked in response to each incoming call or only periodically with results being stored in local memory of the bridging computer 102.

Telephony bridging instructions may be added by a user via: 1) a user interface on the bridging computer 102 for storage in local memory and/or at the remote server; 2) the computer 126 directly attached to the bridging computer 102 via any direct wired or wireless link for storage in local memory and/or at the remote server; 3) a computer 122 attached to the packet data network 104 for storage in local memory and/or at the remote server 120. Most instructions are prepared before any PSTN or packet data network calls are received. Instructions may also be delivered by a user via an input interface of the bridging computer 102 as part of the incoming call setup or during an ongoing call. Likewise, the calling party can interact via a user input interface on the calling device prior to a call attempt (possibly as part of a phone book or through preliminary interaction before attempting to set up a call), during call setup (with local and/or bridging computer 102 interaction), and during the ongoing call itself (with local and bridging computer 102 interaction).

Typical telephony bridging instructions may cause the bridging computer 102 to bridge the incoming call or to forward the incoming call. For example, instructions may specify that: 1) all incoming PSTN calls, PSTN calls with specified CLIDs (or other PSTN identifier), or all PSTN calls except specified CLIDs (or other PSTN identifier) are to be forwarded to a specified PSTN telephone number or bridged to a specified packet data network address or specified handle (with local or tracking server address lookup) after ZZ rings (where ZZ is any number from zero upward) or with local confirmation only; and 2) all incoming packet data network calls, packet data network calls from specified handles or addresses, or all packet data network calls except those with specified handles or addresses are to be bridged to a specified PSTN telephone number or forwarded to a specified packet data network address or specified handle (with local or tracking server handle to address lookup) after ZZ rings (where ZZ is any number from zero upward) or with local confirmation only.

Any identified instructions are also presented via the bridging computer 102. For example, the bridging computer 102 will respond to the identification of an instruction relating to an incoming call by displaying information relating to such instruction on a local display and/or audibly via base unit and/or headpiece speakers. For example, in response to a PSTN call received from a PSTN telephone 117, the bridging computer 102 identifies an instruction requiring that "all incoming PSTN calls are to be bridged to a handle of the bridging computer 102 with zero (0) rings". To carry out this instruction, the bridging computer 102 first retrieves the current network address of the telephone 116 from the tracking server 120. This retrieval may be done periodically in advance or in response to the incoming call. Alternatively, the telephone 116 may periodically deliver its current network address directly to the bridging computer 102. The bridging computer 102 uses the network address to attempt to establish the call with the telephone 116 (e.g., causing the telephone 116 to ring). Upon detecting pickup at the telephone 116, the bridging computer 102 begins a bi-directional bridging process to communicatively couple the telephones 116 and 117. In addition, the bridging computer 102 displays the bridging information and call status, e.g., connection-time, ringing, hang-up, etc., on its local screen.

If instead of "after zero rings" the instruction required "with local confirmation only", before attempting to establish the call with the telephone 116, the bridging computer 102 would first begin to ring locally and, upon local pickup, prompt (with local audible and visual interfaces) for confirmation/authorization for the bridging. If no pickup is detected or confirmation is otherwise not received, the instruction is not carried out. Instead, the incoming call could be answered locally or sent immediately to voice mail as preset or as the locally answering user commands.

Finally, if instead of "after zero rings" the instruction required "after 4 rings", the bridging computer 102 would begin to ring locally. If pickup is detected during or before the 4^{th} ring, the bridging computer 102 would abort the instruction and handle the call locally. If a "voicemail" instruction is entered locally before or during the 4^{th} ring, the call will be forwarded immediately to voice mail and the instruction will be aborted. If however, the 4 rings occur without user interaction, the bridging computer 102 will continue the instruction by causing the telephone 116 to provide the 5^{th} and further rings, and, upon pickup detect, will bridge the telephones 116 and 117.

The bridging functions of the bridging computer 102 may also be employed to access a remote PSTN message server 130 or remote packet data network message server 132. Typical telephony bridging instructions for bridging to obtain messages may cause all incoming PSTN calls, PSTN calls with specified CLIDs (or other PSTN identifier), or all PSTN calls except specified CLIDs (or other PSTN identifier) to be forwarded to a specified PSTN telephone number or bridged to a specified packet data network address or specified handle (with local or tracking server address lookup) after ZZ rings (where ZZ is any number from zero upward) or with local confirmation. Upon failure of bridging termination or local termination of the PSTN call, the PSTN call is bridged to a voice mail handle or specified network address associated with the message server 132, or forwarded to a voice mail telephone number associated with the message server 130 using local or PSTN infrastructure forwarding functionality.

Further, all incoming packet data network calls, packet data network calls from specified handles or addresses, or all packet data network calls except those with specified handles or addresses are bridged to a specified PSTN telephone number or forwarded to a specified packet data network address or specified handle (with local or tracking server handle to address lookup). After ZZ rings (where ZZ is any number from zero upward) or with local confirmation that terminal of the call has not occurred, the bridging computer 102 forwards the incoming packet data network call to a voice mail handle or specified network address associated with message server 132, or bridged to a voice mail telephone number associated with message server 130 using local bridging functionality.

In an alternate operation, bridging computer 102 receives an incoming VoIP telephony call. In response to the incoming VoIP telephony call, bridging computer 102 obtains telephony bridging instructions for the call. Such telephony bridging instructions may direct the bridging computer 102 to bridge the call to PSTN telephone 117 via the PSTN 106. When bridging the incoming VoIP call the bridging computer 102 converts the call from a VoIP telephony format to a PSTN telephony format as part of the bridging function and bridges the incoming VoIP call to the PSTN terminal via a PSTN 106 connection to the PSTN terminal 117. As was the case with the incoming PSTN call, the bridging computer 102 may also choose to terminate the VoIP call based upon the telephony bridging instructions. In such case, the bridging computer 102 provides a ring tone or other alert signal to the user and, upon the user's acceptance of the call, terminates the call to the user of the bridging computer 102. Further, the telephony bridging instructions may cause the bridging computer 102 to deliver the VoIP telephony call to voice mail, either local voice mail or remote voice mail at a message server 130 or 132.

According to another operation of the present invention, the bridging computer 102 accesses tracking server 120 to obtain all or some of the telephony bridging instructions. With one of its operations, tracking server 102 tracks the whereabouts of particular terminals, each particular terminal respective to one or more users. When a call is incoming to bridging computer 102, the bridging computer 102 queries the tracking server 120 with a user identifier. This user identifier may simply be a handle that the user has established. The user identifier could also include the handle plus another component such as a VoIP telephony domain descriptor (service provider descriptor), a terminal handle, and/or a terminal port handle. Based on the user identifier received in the query by the tracking server 120 from bridging computer 102, the tracking server 120 provides a response to bridging computer 102. This response includes some or all of the telephony bridging instructions. The telephony bridging instructions may include a direction whether to bridge the call, a destination VoIP packet network address, a destination PSTN telephone number, and/or additional information.

In accessing the tracking server 120, the bridging computer 102 may send additional information with the query, such as a CLID of a PSTN call, a destination PSTN number of the PSTN call, a source packet data network address of a VoIP call, a destination packet data network address of the VoIP call, status information of the bridging computer 102, or additional information. In response, the tracking server 120 may provide telephony bridging instructions based upon this additional information sent to it by the bridging computer 102.

The telephony bridging instructions, locally obtained and/or obtained from tracking server 120, may differ based upon packet data network address(es) and/or PSTN number(s) associated with the incoming call. For example, an incoming PSTN call from PSTN telephone 117 may be bridged to VoIP terminal 116 while an incoming PSTN call from cell phone 118 may not be bridged to VoIP terminal 116, such different handling of the calls based upon the differing PSTN numbers of terminals 117 and cell phone 118. Likewise, bridging may be disabled for one of cell phone 118 or PSTN telephone 117.

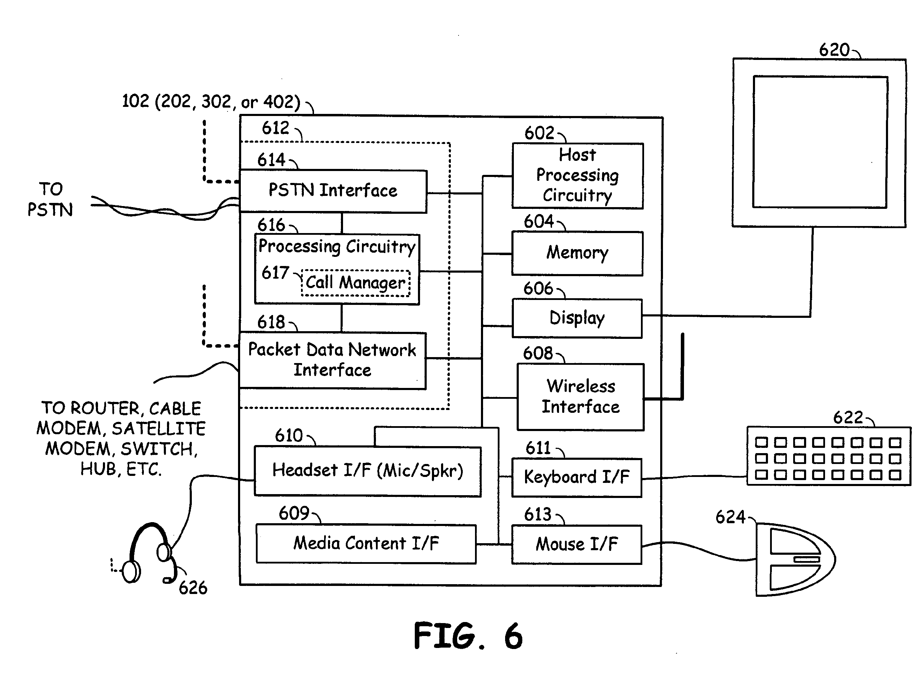

Bridging may be based upon a source packet data address, e.g., IP address of the source VoIP terminal or the destination IP address of the VoIP call. For example, an incoming VoIP telephone call originated from VoIP phone 114 may be bridged by bridging computer 102 to PSTN telephone 117 while an incoming VoIP call from VoIP telephone 112 may not be bridged; the determination of whether to bridge the incoming VoIP call based upon the packet data network address (IP address) of the calling VoIP terminal. Bridging computer 102 may be accessed via multiple packet data network addresses. When an incoming VoIP call is addressed to a first one of these packet data network addresses, bridging computer 102 may enable bridging. However, VoIP telephone calls directed toward another packet data network address of the bridging computer 102 may be denied bridging and sent to voice mail. Further details and description of these operations are described in more detail with reference to FIGs. 6 and 8-19.

According to another aspect of the present invention, the bridging computer 102 is operable to receive a PSTN call request (first call request) relating to an incoming call via the PSTN 106. The bridging computer 102 is then operable to create a VoIP call request (second call request) based upon the PSTN call request and to send the VoIP call request via the packet data network 104. Moreover, according to yet another aspect of the present invention, the bridging computer 102 is operable to receive a VoIP call request (first call request) relating to an incoming call via the packet data network 104. The bridging computer 102 is then operable to create a PSTN call request (second call request) based upon the VoIP call request and to send the PSTN call request via the PSTN. These call requests may result in bridging by the bridging computer 102, bridging by the service provider bridging device 124, or bridging by both the bridging computer 102 and the service provider bridging device 124.

For example, a first portion of a bridged call may be bridged by bridging computer 102 while a second portion of the call the bridged call may be bridged by the service provider bridging device 124. Such "shared bridging" may result in the bridging computer 102 performing half-duplex bridging and the service provider bridging device 124 performing half-duplex bridging. With a particular example, PSTN terminal 118 calls bridging computer 102 via cellular network 110 and PSTN 106. Based upon its telephony bridging instructions, the bridging computer 102 determines that bridging to VoIP terminal 116 is required. However, due to operating constraints, the bridging computer 102 determines that it will bridge incoming voice signals originating with the PSTN terminal 118 and destined for the VoIP terminal 116 while the service provider bridging device 124 will bridge voice signals originating from the VoIP terminal 116 and destined for the PSTN terminal 118. Of course, the bridging computer 102 could initiate full bridging by the service provider bridging device 124 as well.

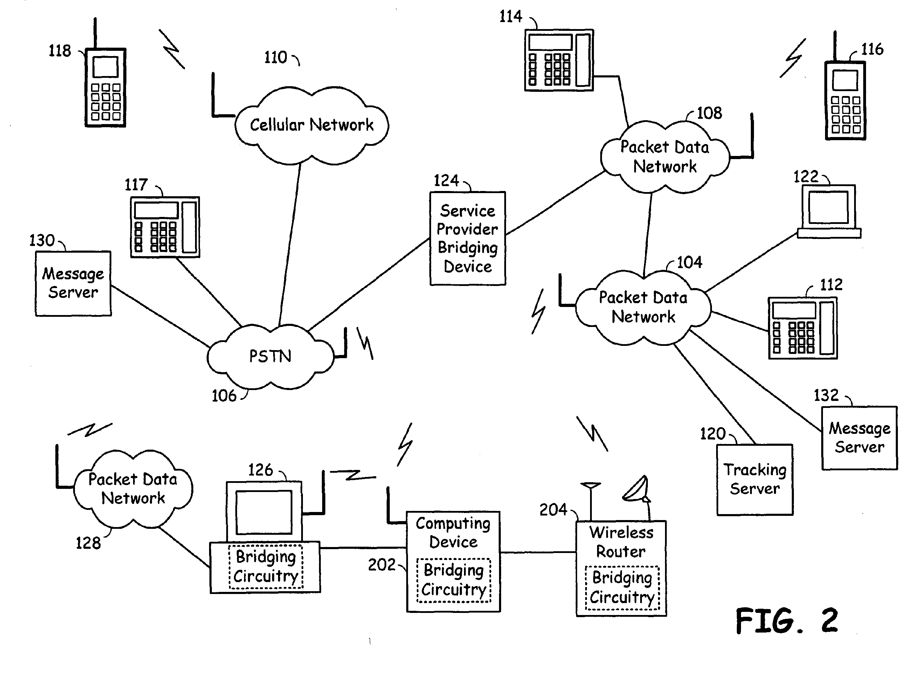

FIG. 2 is a diagram illustrating a communication system that includes a telephony bridging computing device constructed in accordance with another embodiment of the present invention. FIG. 2 retains common numbering of same/similar elements with FIG. 1. In particular, with the system of FIG. 2, a bridging computer 202 constructed according to the present invention couples to PSTN 106 via a wireless local loop. Thus, bridging computer 202 does not have a wired, fiber optic, or other physical connection to PSTN 106. Bridging computer 202 couples wirelessly to the packet data network 104 via wireless router 204. Bridging computer 202 also wired and/or wirelessly couples to computer 126 and to packet data network 128. Packet data network 128 wired and/or wirelessly couples to packet data network 104 and packet data network 108.

The wireless router 204 services a WiMAX connection, a point-to-point wireless connection, a WLAN connection, a cellular wireless packet data network connection, a satellite network connection, or another wireless connection that supports packet data communications. The operations of bridging computer 202 are similar/same as those described with reference to FIG. 1. In particular, bridging computer 202 bridges calls between the PSTN 106 and the packet data network 104. The bridging computer 202 is operable to bridge VoIP calls originating from any VoIP telephone 112, 114, 116, or 122 to any PSTN telephone 117 and cellular phone 118. Further, the bridging computer 202 is operable to bridge PSTN calls originating from PSTN telephone 117 or cellular phone 118 to any of VoIP telephones 112, 114, 116, or 122. The operations of bridging computer 202 will be described further herein with reference to FIGs. 6 and 8-19.

As is shown in FIG. 2, the bridging computer 202 and, optionally or alternatively computer 126 and wireless router 204 include(s) bridging circuitry. While the bridging computer 202 controls bridging setup and bridging operations, computer 126, and wireless router 204 may assist in the bridging setup and bridging operations according to embodiments of the present invention.

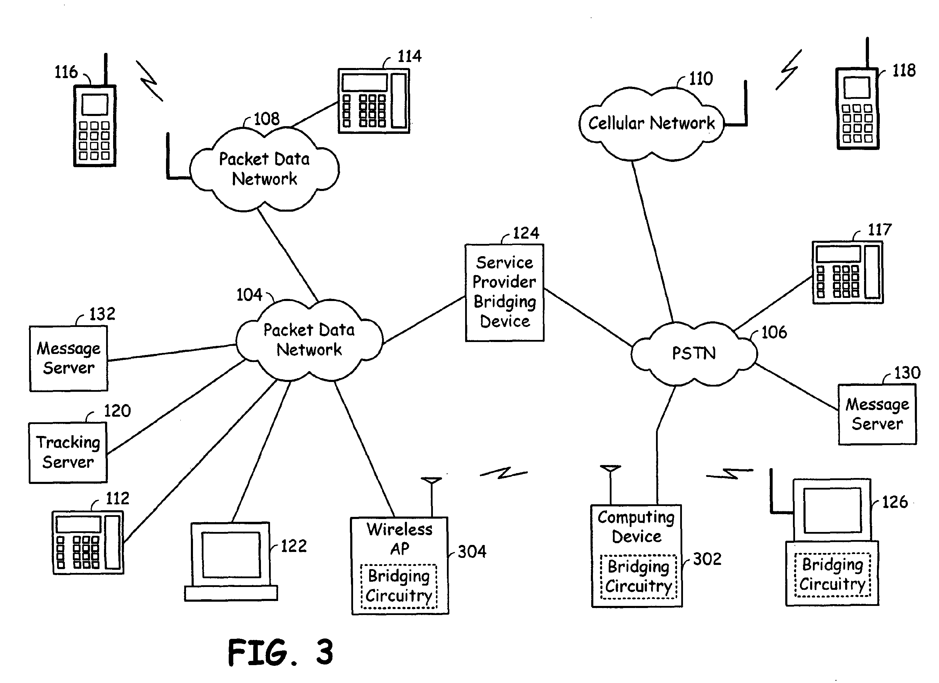

FIG. 3 is a diagram illustrating a communication system that includes a telephony bridging computing device constructed in accordance with yet another embodiment of the present invention. FIG. 3 retains common numbering of same/similar elements with FIGs. 1 and 2. Bridging computer 302 couples via a wired connection to PSTN 106 and wirelessly couples to packet data network 104 via wireless access point 304. Computer 126 wirelessly couples to bridging computer 302 and to wireless access point 304. The wireless access point 304 supports WLAN and/or Wireless Personal Area Network (WPAN) communications. The WLAN communications may operate according to any of the IEEE 802.11 standards such as IEEE 802.11a, IEEE 802.11b, IEEE 802.11g, IEEE 802.11n, or another WLAN operating standard. WPAN operations may be according to the Bluetooth operating standard or the IEEE 802.15 operating standard, for example. As was the case with bridging computers 102 and 202 of FIGs. 1 and 2, respectively, bridging computer 302 is operable to bridge calls between the packet data network 104 and the PSTN 106.

As is shown in FIG. 3, the bridging computer 302 and, optionally or alternatively computer 126 and wireless access point 304 include(s) bridging circuitry. While the bridging computer 302 controls bridging setup and bridging operations, computer 126, and wireless access point 304 may assist in the bridging setup and bridging operations according to embodiments of the present invention.

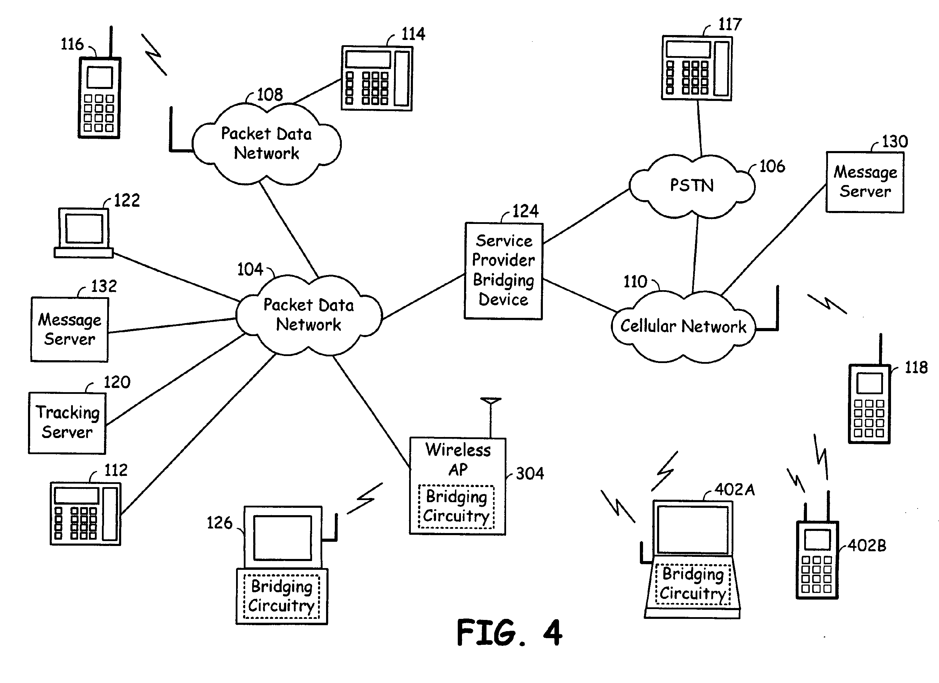

FIG. 4 is a diagram illustrating a communication system that includes a telephony bridging computing device constructed in accordance with a further embodiment of the present invention. FIG. 4 retains common numbering of same/similar elements with FIGs. 1, 2, and 3. Bridging computer 402A is a portable computer that supports both PSTN telephony and VoIP telephony and the bridging setup and bridging operations of the present invention. Bridging computer 402B is a portable telephone (e.g., wireless handset that supports both PSTN telephony and VoIP telephony) that supports bridging setup and bridging operations of the present invention. Bridging computers 402A and 402B support wireless connections with cellular network 110 for PSTN telephony operations. Further, bridging computers 402A and 402B support wireless connections to wireless access point 304 that operate according to a WLAN or WPAN communication standard. Bridging computers 402A and 402B wirelessly couple to computer 126, which wirelessly couples to packet data network 104 via wireless access point 304, for example.

As is shown in FIG. 4, the bridging computers 402A and 402B and, optionally or alternatively computer 126 and wireless access point 304 include(s) bridging circuitry. While the bridging computers 402A and 402B control bridging setup and bridging operations, computer 126, and wireless access point 304 may assist in the bridging setup and bridging operations according to embodiments of the present invention. The bridging operations of bridging computers 402A and 402B are similar to or the same as the bridging operations previously described with reference to FIGs. 1-3 and that will be described further herein with reference to FIGs. 6 and 8-19.

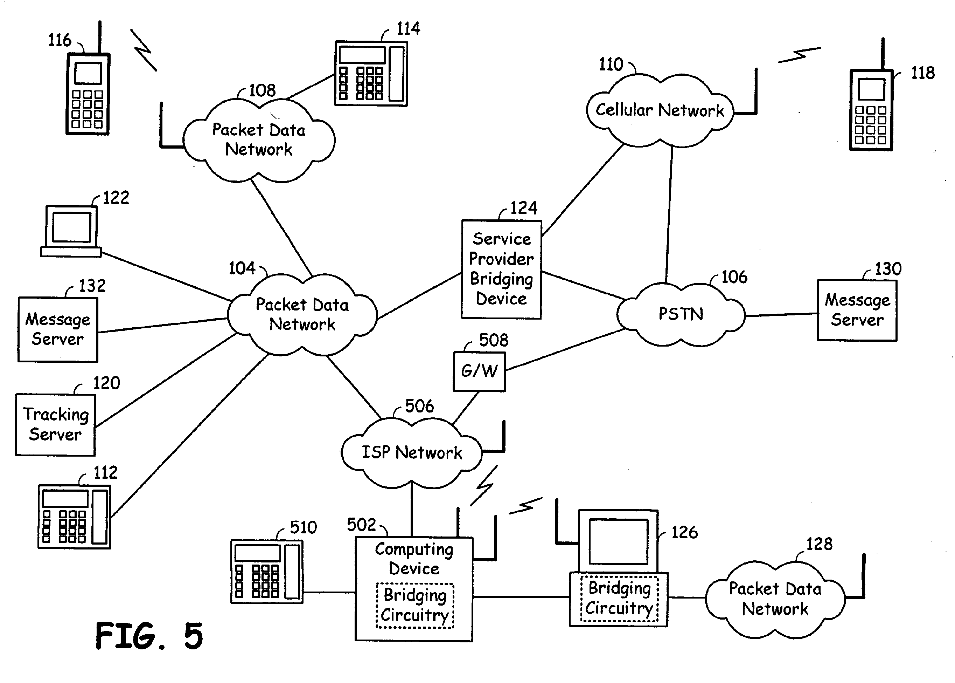

FIG. 5 is a diagram illustrating a communication system that includes a telephony bridging computing device constructed in accordance with still another embodiment of the present invention. Bridging computer 502 couples to an ISP network 506 via a wired and/or a wireless link. ISP network 506 couples to the packet data network 104 and couples to the PSTN 106 via gateway 508. Computer 126 couples to bridging computer 502 via wired and/or wireless coupling. Further, the computer 126 couples to packet data network 128 via wired and/or wireless coupling. The packet data network 128 wired and/or wirelessly couples to the ISP network 506. The bridging computer 502, computer 126, and packet data network 128 may service a premises such as a home, an office, or another client setting.

Bridging computer 502 receives its PSTN phone service via ISP network 506. Bridging computer 502 provides a PSTN user interface similar to a conventional PSTN telephone. However, PSTN service is provided via the ISP network 506 and the gateway 508. The bridging computer 502 may be accessed by PSTN telephones, e.g., by PSTN telephone 117 or cellular terminal 118, via the gateway 508. A user interface provided by the bridging computer 502 may be via voice terminal 510.

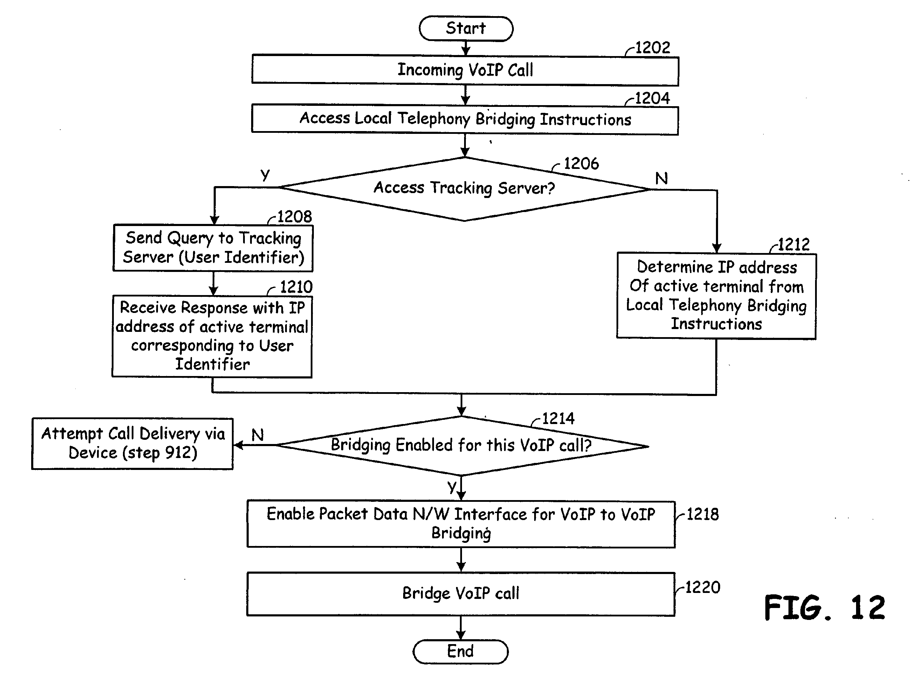

According to the present invention, bridging computer 502 is operable to bridge telephone calls between the packet data network 104 and the PSTN 106. In one operation, the bridging computer 502 bridges a PSTN telephone call originating from PSTN telephone 117 to VoIP telephone 112. Depending upon its interface to the ISP network 506, bridging computer 502 converts formats of the telephone call between a PSTN telephony format and a VoIP telephony format. Alternatively, bridging computer 502 interfaces telephone calls with the ISP network 506 using only a VoIP telephony format. In such case, gateway 508 converts the call between a PSTN telephony format and a VoIP telephony format and bridging computer 502 is required only to bridge VoIP voice packets. Such bridging may include simply remarking voice packets with differing IP addresses. Alternatively, bridging computer 502 may encapsulate voice packets it receives into packets having a differing destination IP address. These operations will be further described with reference to FIG. 12.

As is shown in FIG. 5, the bridging computer 502 and, optionally or alternatively computer 126 include(s) bridging circuitry. While the bridging computer 502 controls bridging setup and bridging operations, computer 126 may assist in the bridging setup and bridging operations according to embodiments of the present invention.

FIG. 6 is a block diagram illustrating a telephony bridging computing device constructed in accordance with the embodiments of FIGs. 1, 2, 3 and/or 4 of the present invention. FIG. 6 illustrates the bridging computer 102 (202, 302, or 402) having a particular structure. In other embodiments, the bridging computer 102 of the present invention may include fewer or more components than are illustrated in FIG. 6. The bridging computer 102 includes generally, host processing circuitry 602, memory 604, display 606 interface, optional wireless interface 608, media content interface 609, headset/handset interface 610, keypad/keyboard interface 611, mouse interface 613, and communication interface 612. These components communicative couple to one another via one or more of a system bus, dedicated communication pathways, or other direct or indirect communication pathways.

The display interface 606 couples the bridging computer 102 to a display 620. The keypad/keyboard interface 611 couples the bridging computer 102 to a keyboard 622. The mouse interface couples the bridging computer 102 to a mouse 624. The headset/handset interface 610 couples the bridging computer 102 to a headset 626. Alternately, the headset 626 is wireless and communicatively couples to the bridging computer 102 via the wireless interface 608. In other embodiments, the display 620, keyboard 622, and mouse 624 physically intercouple with the bridging computer 102 to form a single physical device. An example of such structure would be a laptop computer, for example bridging computer 402A of FIG. 4. The bridging computer 102, in addition to performing the telephony bridging setup and bridging operations of the present invention, also supports other computer applications that are known.

Host processing circuitry 602 may be, in various embodiments, a microprocessor, a digital signal processor, a state machine, an application specific integrated circuit, a field programming gate array, or other processing circuitry. Memory 604 may be random access memory, read-only memory, flash memory, a disk drive, an optical drive, or another type of memory that is operable to store computer instructions and data. Display interface 606 may be a conventional PCMCIA interface card, a PCI interface card, or another interface type. Wireless headset interface 608 may be a WPAN interface such as a Bluetooth interface, a proprietary wireless headset interface, or another wireless interface.

Communication interface 612 includes a PSTN interface 614, processing circuitry 616, and a packet data network interface 618. The PSTN interface 614 communicatively couples, either wirelessly or wired, to the PSTN 106 as was previously described with reference to FIGs. 1, 2, 3, and 4. The packet data network interface 618 communicatively couples to the packet data network 104 via a wireless and/or a wired connection as was previously described with reference to FIGs. 1, 2, 3, and 4. Generally, the components of the bridging computer 102 work to bridge calls between the PSTN 106 and the packet data network 104. The processing circuitry 602 and/or 616 controls the operation of the bridging computer 102 to perform these bridging operations. In performing operations according to the present invention, the processing circuitry 602 and/or 616 determines that a call is incoming to the bridging computer 102. The processing circuitry 602 and/or 616 then obtains telephony bridging instructions for the call. Based upon these telephony bridging instructions, the processing circuitry 602 and/or 616 enables the PSTN interface 614 and the packet data network interface 618 to bridge the call between the PSTN interface 614 and the packet data network interface 618 (between PSTN 106 and packet data network 104). In performing these bridging operations, the bridging computer 102 is operable to convert the call between a VoIP telephony format and a PSTN telephony format.

Generally, the processing circuitry 602 and/or 616 is operable selectively to setup and bridge an incoming call between the first interface (PSTN interface 614) and the second interface (packet data network interface 618). In selectively bridging the incoming call, the processing circuitry is operable to: (1) receive a PSTN call request relating to the incoming call via the first interface; (2) create a Voice over Internet Protocol (VoIP) call request based upon the PSTN call request; and (3) send the VoIP call request via the second interface. Alternatively, in selectively bridging the incoming call, the processing circuitry 602 and/or 616 is operable to: (1) receive a Voice over Internet Protocol (VoIP) call request relating to the incoming call via the second interface; (2) create a PSTN call request based upon the VoIP call request; and (3) send the PSTN call request via the first interface.

In selectively bridging the incoming call, the processing circuitry may retrieve telephony bridging instructions from local memory 604 and bridge the incoming call based upon the telephony bridging instructions. The processing circuitry 602 and/or 616 may be further operable to receive telephony bridging instructions via the keyboard 622 and/or headset 626 and to store the telephony bridging instructions in the local memory 604. In some operations, the processing circuitry 602 and/or 616 may receive telephony bridging instructions with the incoming call and bridge the incoming call based upon the telephony bridging instructions. In other operations, the processing circuitry 602 and/or 616 is operable to query a tracking server 120, receive telephony bridging instructions from the tracking server 120 that includes a destination network address of a terminal, and to bridge the incoming call based upon the telephony bridging instructions.

In selectively bridging the incoming call, the processing circuitry 602 and/or 616 may attempt local termination of the incoming call and, when local termination of the incoming call is not successful, bridge the incoming call. The processing circuitry 602 and/or 616 may interact with a remote computer 120, 122, or 126 via the packet data network interface 618 to create the telephony bridging instructions based upon input received from the remote computer 120, 122, or 126.

The processing circuitry 602 and/or 616 is further operable to determine a destination packet data network address for the call and determine whether call bridging is to be enabled for the call based upon the destination packet data network address for the call. Further, the processing circuitry 602 and/or 616 may be further operable to determine a called PSTN number for the call and to determine whether call bridging is to be enabled for the call based upon the destination PSTN number for the call. Alternatively, the processing circuitry 602 and/or 616 may be further operable to determine a source packet data network address of the call and to determine whether call bridging is to be enabled for the call based upon the source packet data network address for the call. In another operation, the processing circuitry 602 and/or 616 may be further operable to determine a calling line identifier (CLID) number of the call and to determine whether call bridging is to be enabled for the call based upon the CLID number of the call.

According to another aspect of the bridging computer 102 of the present invention, the bridging computer 102 is operable to receive a first call setup request from the PSTN 106 via a first interface (PSTN interface 614). In response to the receipt of the first call setup request, the bridging computer 102 is operable to selectively prepare a second call setup request based upon the first call setup request. Finally, the bridging computer 102 is operable to send the second call setup request to the Internet, e.g., packet data network 104 or 108 via the second interface (packet data network interface 618). This functionality may be performed by the processing circuitry 616 by execution of call manager software 617 running thereon.

With this aspect of the present invention, the bridging computer 102 does not necessarily bridge an incoming call relating to the first call setup request, but may do so. The bridging computer 102 may selectively bridge an incoming call relating to the first call setup request between the PSTN 106 and the packet data network 104 (Internet). However, the bridging computer 102 may alternately enable the service provider bridging device 124 to selectively bridge the incoming call relating to the first call setup request between the PSTN 106 and the packet data network 104. Still further, the bridging computer 102 may selectively bridge a first portion of the incoming call relating to the first call setup request between the PSTN 106 and the packet data network 104 and enable the service provider bridging device 124 to selectively bridge a second portion of the incoming call relating to the first call setup request between the PSTN 106 and the packet data network 104.

In a complementary operation, the bridging computer 102 may receive a first call setup request from the packet data network 104 via a second interface (packet data network interface 618). In response to the receipt of the first call setup request, the bridging computer 102 is operable to selectively prepare a second call setup request based upon the first call setup request. Finally, the bridging computer 102 is operable to send the second call setup request to the PSTN 106 via the first interface (PSTN interface 614). With this aspect of the present invention, the bridging computer 102 does not necessarily bridge an incoming call relating to the first call setup request, but may do so, as was described above.

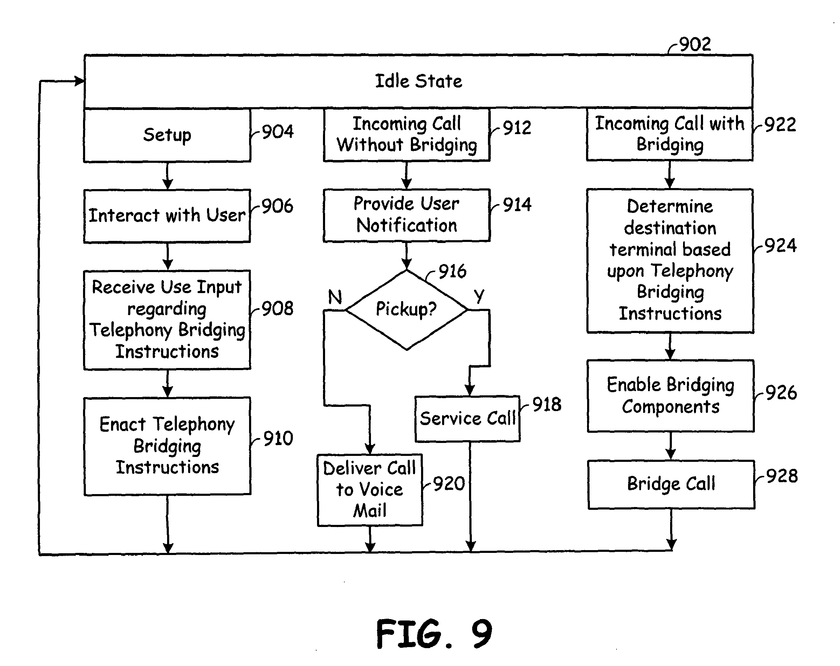

In selectively preparing the second call setup request based upon the first call setup request, the bridging computer 102 may use telephony bridging instructions. These telephony bridging instructions may be retrieved from one or more of local memory, a user interface, with the first call setup request, from a tracking server, from a remote computer, otherwise. Further, in selectively preparing the second call setup request based upon the first call setup request, the bridging computer 102 may employ a called PSTN number, a calling line identifier (CLID) number, a source IP address, and/or a destination IP address relating to the first call setup request. Further operations of the bridging computer 102 (202, 302, or 402) will be described further with reference to FIGs. 9 - 21.

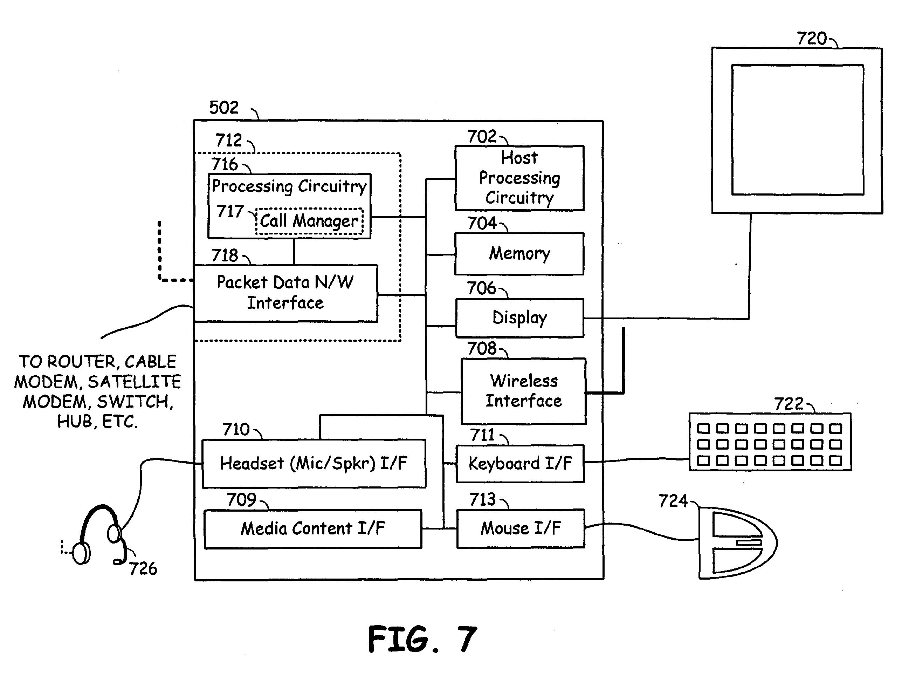

FIG. 7 is a block diagram illustrating a telephony bridging computing device constructed in accordance with the embodiment of FIG. 5 of the present invention. The bridging computer 502 includes host processing circuitry 702, memory 704, display interface 706, wireless interface 708, wired headset interface 710, keypad/keyboard interface 711, and mouse interface 713, which function similarly to or the same as corresponding components 602-613 of FIG. 6. Monitor 720 couples to bridging computer 502 via display interface 706. Keyboard 722 couples to the bridging computer 502 via the keyboard interface 711. Mouse couples to the bridging computer 502 via the mouse interface 713. Headset 726 couples to the bridging computer 502 via the headset interface 710 and/or the wireless interface 708.

The bridging computer 502 further includes a communication interface 712 that includes processing circuitry 716 having call manager software 717 running thereon and a packet data network interface 718. The processing circuitry 716 is present in some embodiments but not others. When the processing circuitry 716 is not present within the packet data network interface 712, processing duties of the bridging computer 502 are performed by host processing circuitry 702. When both processing circuitry 716 and host processing circuitry 702 are present, these components may jointly perform the processing requirements of bridging computer 502.

The packet data network interface 718 couples wirelessly and/or in a wired fashion to the packet data network 104. As was shown in FIG. 5, bridging computer 502 has a single communication link to both the PSTN 106 and the packet data network 104 via the ISP network 506. As was further shown in FIG. 5, bridging computer 502 may have a wireless connection to the ISP network 506.

According to one embodiment to the present invention, the processing circuitry 702 and/or 716 is operable to determine that a call is incoming to the bridging computer 502 via the packet data network interface 718 from a calling VoIP terminal 116, for example. The incoming VoIP call is intended for the bridging computer 502. In response to the incoming VoIP telephone call, the bridging computer 502 obtains telephony bridging instructions for the call. These telephony bridging instructions include a network address of an alternate destination terminal, e.g., VoIP telephone 112 (as shown in FIG. 5). The processing circuitry 702 and/or 716 is operable selectively to bridge the call between the calling VoIP terminal 116 and VoIP terminal 112 based upon the telephony bridging operations. In an alternate operation, based upon the telephony bridging instructions, the bridging computer 502 bridges the call to PSTN telephone 117 via the PSTN 106, gateway 508, and ISP network 506.

In selectively bridging the incoming call, the processing circuitry 702 and/or 716 is operable to bridge first voice information and to setup bridging of second voice information by a service provider bridging device 124. In such case, the network destination address would be an Internet Protocol (IP) address. Alternately, when the processing circuitry 702 and/or 716 selectively bridges an incoming VoIP call to a PSTN terminal (via an intervening ISP network 506 and gateway 508, for example) the alternate destination address is a PSTN telephone number. In retrieving telephony bridging instructions, the processing circuitry 702 and/or 716 operates same/similarly as was previously described with reference to FIGs. 1-6.

According to another aspect of the present invention, the bridging computer 502 is operable to receive a first call setup request via the packet data network interface 718. In response to the receipt of the first call setup request, the bridging computer 1502 is operable to selectively prepare a second call setup request based upon the first call setup request. Finally, the bridging computer 502 is operable to send the second call setup request to the Internet via the packet data network interface 618. With this aspect of the present invention, the bridging computer 502 does not necessarily bridge an incoming call relating to the first call setup request, but may do so. The bridging computer 502 may selectively bridge an incoming call relating to the first call setup request. However, the bridging computer 502 may alternately enable the service provider bridging device 124 to selectively bridge the incoming call. Still further, the bridging computer 502 may selectively bridge a first portion of the incoming call relating to the first call setup request and enable the service provider bridging device 124 to selectively bridge a second portion of the incoming call relating to the first call setup request. The bridging computer 502 may base the second call setup request upon telephony bridging instructions as well. The bridging computer 502 may obtain the telephony bridging instructions as was previously described. Further operations of the bridging computer 502 will be described with reference to FIGs. 9 - 21.

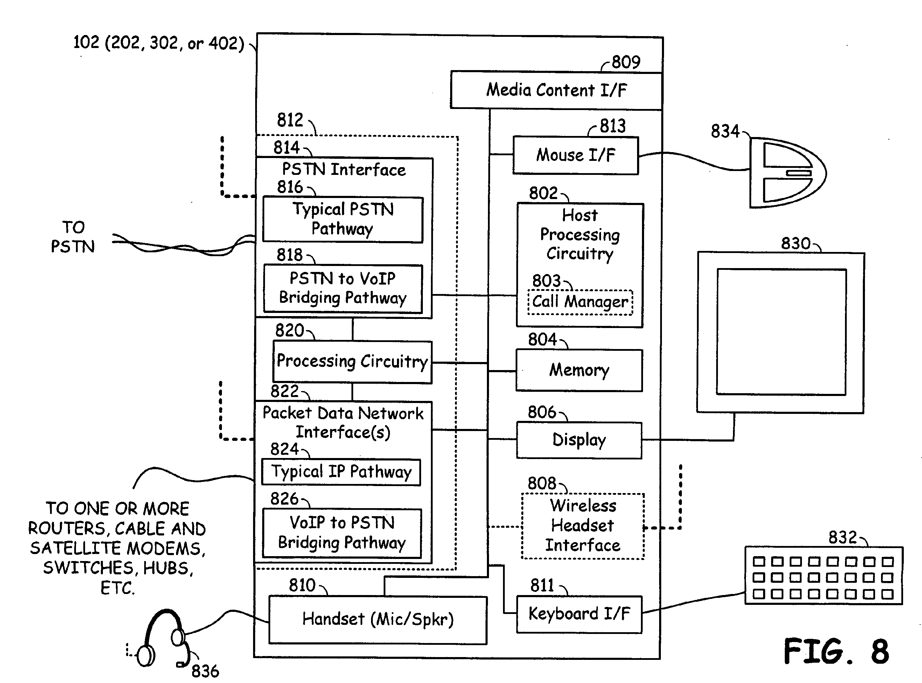

FIG. 8 is a block diagram illustrating another telephony bridging computing device constructed in accordance with the embodiments of FIGs. 1, 2, 3 and/or 4 of the present invention. The structure illustrated in FIG. 8 is an alternate structure of bridging computers 102, 202, 302, and/or 402. The bridging computer 102 includes host processing circuitry 802, memory 804, display interface 806, wireless interface 808, wired headset interface 810, keypad/keyboard interface 811, and mouse interface 813, which function similarly to or the same as corresponding components 602-613 of FIG. 6. Monitor 830 couples to bridging computer 102 via display interface 806. Keyboard 832 couples to the bridging computer 102 via the keyboard interface 811. Mouse couples to the bridging computer 502 via the mouse interface 713. Headset 726 couples to the bridging computer 502 via the headset interface 710 and/or the wireless interface 708. The communication interface 812 includes a PSTN interface 814, processing circuitry 820, and a packet data network interface/interfaces 822.

In one particular operation of the bridging computer 102, a call is incoming from the PSTN 106. In response to this incoming call, the bridging computer 102, and in particular the host processing circuitry 802 and/or the processing circuitry 820 obtains telephony bridging instructions for the call. These telephony bridging instructions may indicate that bridging is required or not required. When bridging is not required, the typical PSTN pathway 816 is employed to terminate the call to the bridging computer 102. When bridging is required, the PSTN interface 814 is controlled by processing circuitry 802 and/or 820 to setup bridging of the call to the packet data network interface(s) 822. In such case, a PSTN to VoIP bridging pathway 818 is setup within the PSTN interface 814. Once the PSTN to VoIP bridging pathway 818 is enabled by the host processing circuitry 802 and/or processing circuitry 820, the PSTN interface 814 and the packet data network interface 822 bridge the call between the PSTN 106 and the packet data network 104. In such case, the communication interface 812 and/or the host processing circuitry 824 converts the call between a VoIP telephony format and a PSTN telephony format.

In another operation of the bridging computer 102, when the bridging computer 102 determines that a VoIP call is incoming via packet data network 104, processing circuitry 802 and/or 820 determines whether to terminate the call to the bridging computer 102 or to bridge the call to the PSTN 106. When the VoIP telephone call is to be terminated to the bridging computer 102, a typical IP pathway 824 is employed. However, when telephony bridging instructions indicate that the incoming VoIP call is to be bridged to the PSTN, processing circuitry 802 and/or 820 enables a VoIP to PSTN bridging pathway 826. In such case, this VoIP to PSTN bridging pathway 826 enables bridging of the incoming VoIP call to the PSTN interface 814 and to the PSTN 106. In such case, the communication interface 812 and/or the host processing circuitry 824 converts the call between a VoIP telephony format and a PSTN telephony format.

Referring to FIG. 1 and FIG. 8, The bridging computer 102 is viewed as residing within a telephony infrastructure supporting both a first call between a first telephony device and a second telephony device and a second call from a third telephony device. Within this structure, the processing circuitry 820 and/or 802 operates in both a call bridging mode and a call end-point mode. The processing circuitry 820 and/or 802 and other circuitry of the bridging computer 102 may alternatively be referred to as "bridging circuitry." The first interface, e.g., 816, communicatively couples the processing circuitry 820 and/or 802 to the first telephony device via the PSTN and pursuant to a first voice format. The a second interface, e.g., 822, communicatively couples the processing circuitry 820 and/or 802 to the second telephony device via an Internet network and pursuant to a second voice format.

The processing circuitry 820 and/or 802, in the call end-point mode, supports the second call by maintaining a first communication pathway between the user interface and the third telephony device. The processing circuitry 820 and/or 802, in the call bridging mode, provides a second communication pathway between the first telephony device and the second telephony device by translating first call information of the first call received via the first interface to the second voice format for delivery to the second telephony device, and translating second call information of the first call received via the second interface to the first voice format for delivery to the first telephony device.

The bridging computer 102 may store the bridging instructions (telephony bridging instructions) in memory 704. The processing circuitry 802 and/or 820 retrieves and executes the bridging instructions to support the second communication pathway. The first voice format may include analog voice signals of a wired network format or a wireless network format, such as a cellular telephony format. Further, the bridging computer 102 may have a user interface unit and a base unit that are physically separate from one another. With such separation, the bridging setup operations and the bridging operations may be performed by the base unit, by the user interface unit, or both by the base unit and the user interface unit. The user interface unit may be a headset, a handset, separate wireless microphone and speaker, or another interface device.

According to another embodiment, the bridging computer 102 is operable to support a call between a first telephony device and a second telephony device using internal bridging circuitry. The first interface communicatively couples the bridging circuitry to the first telephony device via to the PSTN and pursuant to a first voice format. The second interface communicatively couples the bridging circuitry to the second telephony device via an Internet network and pursuant to a second voice format. The bridging circuitry provides a call pathway between the first telephony device and the second telephony device by translating first call information received via the first interface to the second voice format for delivery to the second telephony device, and by translating second call information received via the second interface to the first voice format for delivery first telephony device.

With this embodiment, the bridging circuitry communicatively couples with the second telephony device using a protocol stack. Further, the call information received via the second interface may be call packets with the bridging computer 102 translating the second call information received via the second interface by reassembling the call packets. Further, with this embodiment the bridging circuitry may expand the call pathway between the first telephony device and the second telephony device to include a third telephony device to establish a three way call. Thus, the bridge may support more than two telephony devices in "3 way calls" or "call conferences." In such case, the bridging computer 102 may include multiple PSTN and multiple Internet participants in the conference.

In its operations, the processing circuitry 820 and/or 802 is operable to analyze incoming call requests received via the first communication interface and the second communication interface to determine whether to enter the call bridging mode or the call end-point mode. In the call end-point mode, the processing circuitry 802 and/of 820 supports a first of the incoming call requests received from the first telephony device by delivering a first incoming call signal to the user interface, waits for a response from the user interface indicating a first pick-up event, and, if the response is received, establishes a first call pathway between the user interface and the first telephony device. In the call end-point mode, the processing circuitry 802 and/or 802 is operable to support a second of the incoming call requests received from the second telephony device by delivering a second incoming call signal to the third telephony device, waiting for a response from the third telephony device indicating a second pick-up event, and, if the response is received, establishing a second call pathway between the second telephony device and the third telephony device.

For bridging operations, the second call pathway is a bridging pathway. The second call pathway may be at least partially isolated from the user interface. The processing circuitry may deliver to the user interface an indication that the second call pathway is in operation. In another operation, the processing circuitry 802 and/or 820 may respond to a termination request from the user interface by disabling the second call pathway. Prior to the disabling of the second call pathway, the processing circuitry 802 and/or 820 may provide an indication of the termination request via at least a portion of the second call pathway.

Further, for a third incoming call request, instead of receiving the response from the user interface indicating the first pick-up event, the processing circuitry receives a bridging instruction from the user interface and responds by exiting the call-end point mode and entering the call bridging mode. Further, or alternately, for a third of the incoming call requests, after failing to receive the response from the user interface indicating the first pick-up event, the processing circuitry attempts to elicit a voice mail message.

FIG. 9 is a flow chart illustrating operation of a telephony bridging computing device constructed in accordance with an embodiment of the present invention. In an idle state 902, the bridging computer 102 performs normal operations, including waiting for particular activity according to embodiment(s) of the present invention. These normal operations 902 may include running application programs such as word processor programs, spreadsheet programs, browsers, games, and other applications.

A first operation according to the present invention includes setup (Step 904) of telephony bridging instructions that will later be used by the bridging computer 102. Manners of initiating setup include, keypad/keyboard interface input, web page interface interaction with the bridging computer 102, voice recognition operations of the bridging computer 102, or another setup initiation type. The bridging computer 102 then interacts with the user via either the user interface (keypad/keyboard, display, voice recognition, etc.) or a web page (Step 906). The bridging computer 102 then receives user input regarding the telephony bridging instructions from the user (Step 908) and, based upon this user input, enacts telephony bridging instructions for subsequent use in processing calls (Step 910).

Another operation according to the present invention occurs when the bridging computer 102 receives an incoming call and determines that bridging will not be performed (Step 912). The incoming call may be a PSTN call or a VoIP call. As was previously described, upon receipt of a call, processing circuitry of the bridging computer 102 obtains telephony bridging instructions and determines whether bridging is be performed for the particular call. If the incoming call is not to be bridged, the bridging computer 102 provides a user notification via a ring tone or another announcement (Step 914). If the user picks up the call (as determined at Step 916), the bridging computer 102 services the call to a completion (Step 918). However, if the user does not pickup the call (as determined at Step 916), the bridging computer 102 delivers the call to voice mail (Step 920). As the reader will appreciate, some incoming calls may be sent directly to voice mail without notification to the user of the incoming call. Further, some calls that are not picked up by a user will simply be terminated after a certain number of rings or ringing will continue until the calling party decides to hang up.

As a further operation according to the present invention, the telephony bridging instructions for the call indicates that the incoming call is to be bridged (Step 922). The bridging computer 102 determines a destination terminal to which the call is to be bridged based upon the telephony bridging instructions (Step 924). The bridging computer 102 then enables components to support the bridging operations (Step 926). When the call is bridged between the PSTN and the packet data network, both the PSTN interface and the packet data network interface are enabled to support bridging of the call. When the bridging computer 102 simply bridges a VoIP call to an alternate destination terminal, only the packet data network interface need be enabled for such bridging. The call is then bridged based upon the telephony bridging instructions using the enabled bridging computer 102 components (Step 928). Such bridging is continued until one or both parties discontinue the call or until another event occurs that requires disruption of the call bridging. From Steps 910, 920, 918, and 928, operation returns to the idle state (Step 902).

According to another embodiment, a bridging computer 102 operates in conjunction with a telephony infrastructure to support a call between a first telephony device and a second telephony device. The bridging computer 102 has a first interface and a second interface, the first interface communicatively coupled to the PSTN, the second interface communicatively coupled to an Internet network. The bridging computer 102 receives first voice signals in a first voice format generated by the first telephony device via the first interface and receives second voice signals in a second voice format generated by the second telephony device via the second interface. The bridging computer 102 translates the first voice signals received from the first voice format to the second voice format and translates the second voice signals received from the second voice format to the first voice format. Finally, the bridging computer 102 delivers the first voice signals in the second voice format to the second telephony device via the second interface and delivers the second voice signals in the first voice format to the first telephony device.

Translating the first voice signals and second voice signals together may include bridging the call between the PSTN and the Internet. The first voice format may be an analog format such as a PSTN format or a cellular format. The second voice format may be defined pursuant to a voice over the Internet network protocol.

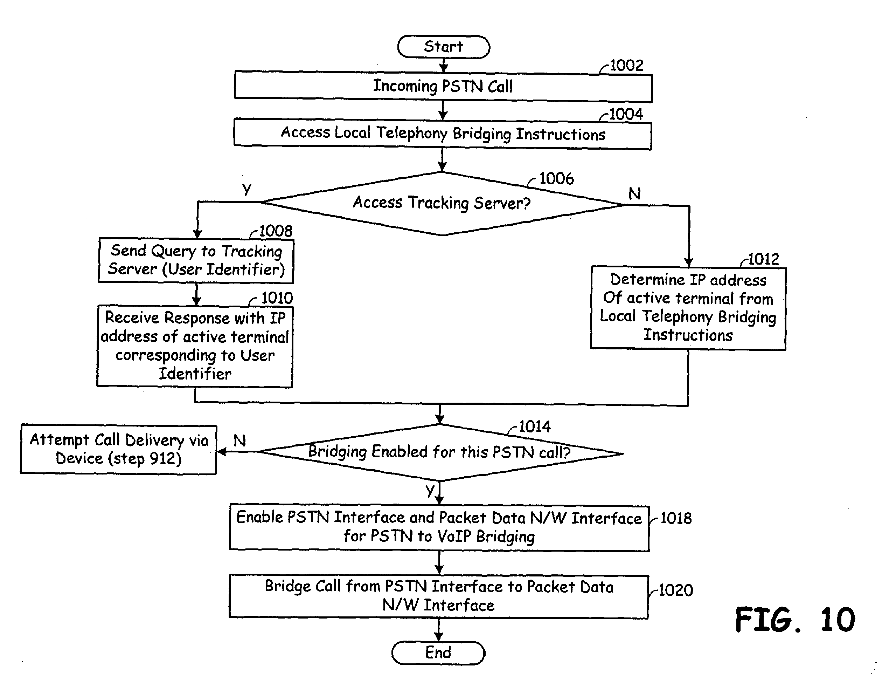

FIG. 10 is a flow chart illustrating PSTN to VoIP bridging operations of a telephony bridging computing device constructed in accordance with an embodiment of the present invention. Operation commences with bridging computer 102 determining that a PSTN call is incoming (Step 1002). The bridging computer 102 then accesses locally stored telephony bridging instructions (Step 1004). In accessing the locally stored telephony bridging instructions, the bridging computer 102 may determine that tracking server access is required (Step 1006). Access of the tracking server 120 may be required based upon the CLID of the PSTN call, the destination PSTN telephone number, a time of day, or upon other factors.

When access of the tracking server is required (Step 1006), the bridging computer 102 sends a query to the tracking server that includes a user identifier (Step 1008). This user identifier corresponds to a user of the bridging computer 102, to the bridging computer 102 itself, or another particular user identifier. The user identifier may include simply the handle of the user, a service provider identifier, a device identifier associated with the incoming call, and/or an incoming device port associated with the incoming PSTN call. The bridging computer 102 then receives a response from the tracking server that includes a packet data network address (IP address) of an active terminal corresponding to the user identifier (Step 1010). Further included with the response may be a particular device identifier and/or a port number to be used in the bridging operations. When access to the tracking server is not required (as determined at Step 1006), the bridging computer 102 uses the local bridging information to determine an IP address of an active terminal for bridging operations (Step 1012). Further bridging information, e.g., device identifier, port number, etc. may also be determined locally.

The bridging computer 102 may determine, based upon the local telephony bridging information or the response received from the tracking server 120 that bridging is not enabled for this PSTN call (Step 1014). When bridging is not enabled for the PSTN call, the bridging computer 102 need not obtain an IP address at Steps 1010 or 1012, although this information may be returned/obtained as a default operation. During some times or for some operating conditions, PSTN to VoIP bridging is not enabled. Alternatively, PSTN to VoIP bridging may be selectively enabled based upon a destination PSTN number (associated with the bridging computer 102), a calling line ID (CLID) for the incoming PSTN call, a time of day, a day of the week, when a user of the bridging computer 102 is present at the locale of the phone but busy, etc. When bridging is not enabled for the PSTN call, the bridging computer 102 attempts call delivery locally, e.g., Step 912 of FIG. 9.

When bridging is enabled for the PSTN call, the bridging computer 102 enables its PSTN interface and its packet data network interface to service the PSTN to VoIP bridging (Step 1018). The bridging computer 102 then bridges the call from the PSTN interface to the packet data network interface (Step 1020). The PSTN to VoIP bridging is performed until the call is completed, until intervening events occur, or for a particular duration of time. Alternately, the bridging computer 102 bridges the call in cooperation with a service provider bridging device 124.

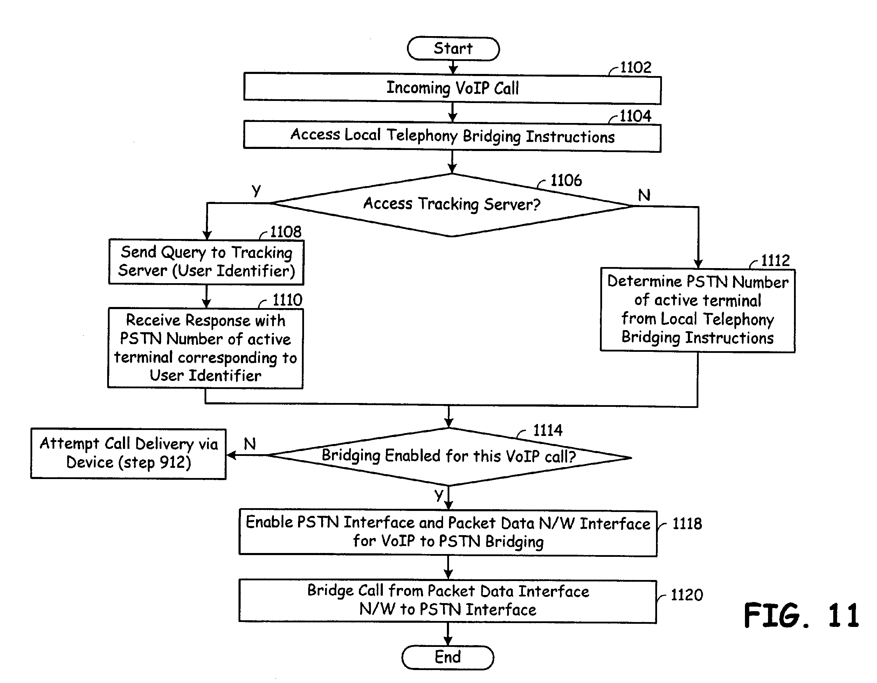

FIG. 11 is a flow chart illustrating VoIP to PSTN bridging operations of a telephony bridging computing device constructed in accordance with an embodiment of the present invention. Operation commences with the bridging computer 102 determining that a VoIP call is incoming (Step 1102). The bridging computer 102 then accesses locally stored telephony bridging instructions (Step 1104). In accessing the locally stored telephony bridging instructions, the bridging computer 102 may determine that tracking server access is required (Step 1106). Access of the tracking server 120 may be required based upon the source address of the VoIP call, the destination address of the VoIP call, a time of day, or upon other factors.

When access of the tracking server 120 is required (Step 1106), the bridging computer 102 sends a query to the tracking server 120 that includes a user identifier (Step 1108). This user identifier corresponds to a user of the bridging computer 102, to the bridging computer 102 itself, or another particular user identifier. The user identifier may include simply the handle of the user, a service provider identifier, a device identifier associated with the incoming call, and/or an incoming device port associated with the incoming VoIP call. The bridging computer 102 then receives a response from the tracking server 120 that includes a PSTN number of an active terminal corresponding to the user identifier (Step 1110). When access to the tracking server is not required (as determined at Step 1106), the bridging computer 102 uses the local bridging information to determine a PSTN number of an active terminal for bridging operations (Step 1112).

The bridging computer 102 may determine, based upon the local telephony bridging information or the response received from the tracking server 120 that bridging is not enabled for this VoIP call (Step 1114). When bridging is not enabled for the VoIP call, the bridging computer 102 need not obtain a PSTN number at Steps 1110 or 1112, although this information may be returned/obtained as a default operation. During some times or for some operating conditions, VoIP to PSTN bridging is not enabled. Alternatively, VoIP to PSTN bridging may be selectively enabled based upon a destination address of the incoming VoIP call, a source address of the VoIP call, a time of day, a day of the week, when a user of the bridging computer 102 is present at the locale of the phone but busy, etc. When bridging is not enabled for the VoIP call, the bridging computer 102 attempts call delivery locally, e.g., Step 912 of FIG. 9.

When bridging is enabled for the VoIP call, the bridging computer 102 enables its PSTN interface and its packet data network interface to service the VoIP to PSTN bridging (Step 1118). The bridging computer 102 then bridges the call from the VoIP interface to the packet data network interface (Step 1120). VoIP to PSTN bridging is performed until the call is completed, until intervening events occur, or for a particular duration of time.

FIG. 12 is a flow chart illustrating VoIP to VoIP bridging operations of a telephony bridging computing device constructed in accordance with an embodiment of the present invention. Operation commences with bridging computer 102 determining that a VoIP call is incoming (Step 1202). The bridging computer 102 then accesses locally stored telephony bridging instructions (Step 1204). In accessing the locally stored telephony bridging instructions, the bridging computer 102 may determine that tracking server access is required (Step 1206). Access of the tracking server 120 may be required based upon the source address of the VoIP call, the destination address of the VoIP call, a time of day, or upon other factors.

When access of the tracking server is required (Step 1206), the bridging computer 102 sends a query to the tracking server that includes a user identifier (Step 1208). This user identifier corresponds to a user of the bridging computer 102, to the bridging computer 102 itself, or another particular user identifier. The user identifier may include simply the handle of the user, a service provider identifier, a device identifier associated with the incoming call, and/or an incoming device port associated with the incoming VoIP call. The bridging computer 102 then receives a response from the tracking server that includes a packet data network address, e.g., IP address, of an active terminal corresponding to the user identifier (Step 1210). When access to the tracking server is not required (as determined at Step 1206), the bridging computer 102 uses the local bridging information to determine an IP address of an active terminal for bridging operations (Step 1212).

The bridging computer 102 may determine, based upon the local telephony bridging information or the response received from the tracking server 120 that bridging is not enabled for this VoIP call (Step 1214). When bridging is not enabled for the VoIP call, the bridging computer 102 need not obtain a VoIP address for bridging at Steps 1210 or 1212, although this information may be returned/obtained as a default operation. During some times or for some operating conditions, VoIP to VoIP bridging is not enabled. Alternatively, VoIP to VoIP bridging may be selectively enabled based upon a destination address of the incoming VoIP call, a source address of the VoIP call, a time of day, a day of the week, when a user of the bridging computer 102 is present at the locale of the phone but busy, etc. When bridging is not enabled for the VoIP call, the bridging computer 102 attempts call delivery locally, e.g., Step 912 of FIG. 9.

With bridging is enabled for the VoIP call, the bridging computer 102 enables its VoIP interface to service the VoIP to VoIP bridging (Step 1218). The bridging computer 102 then bridges the call using the VoIP interface (Step 1220). The VoIP to VoIP bridging is performed until the call is completed, until intervening events occur, or for a particular duration of time.

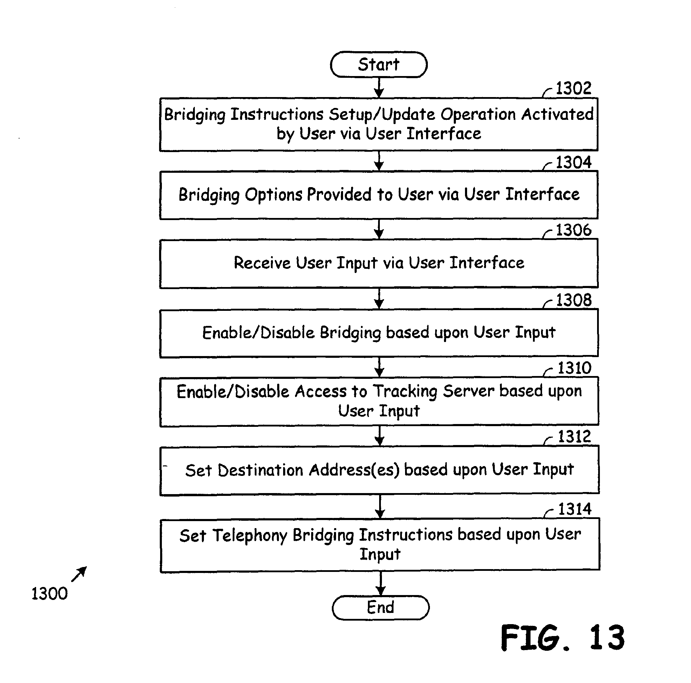

FIG. 13 is a flow chart illustrating local user interface bridging setup operations of a telephony bridging computing device constructed in accordance with an embodiment of the present invention. Operation 1300 of FIG. 13 commences with initiation of telephony bridging instruction setup/update by a user via a user interface (Step 1302). The local user interface may include a display, a keypad/keyboard, a mouse, and/or a voice interface. Of course, other components could also be used to interact locally with a user.

After activation of the telephony bridging instructions setup/update, the processing circuitry of the bridging computer 102 provides telephony bridging setup/update options to the user via the user interface (Step 1304). Options may include options to enable/disable bridging, whether to access remote the tracking server for additional telephony bridging instructions, to set one or more destination addresses for bridging, to set particular rules for bridging, and other options for setting/altering the telephony bridging instructions. For example, bridging may be enabled or disabled based upon a particular source IP address, a particular calling line ID, a particular destination IP address, a particular destination PSTN number, or another identifier associated with an incoming call. In setting the telephony bridging instructions, bridging may be selectively enabled or disabled for particular times of the day, for particular days of the week, and/or for days of the month, for example

In response to providing the options to the user, the processing circuitry of the bridging computer 102 receives user input via the user interface (Step 1306). Based upon the user input, the processing circuitry of the bridging computer 102 selectively enables/disables bridging (Step 1308). Further, the processing circuitry of the bridging computer 102 selectively enables/disables access to the tracking server based upon the user input (Step 1310). For example, access to the tracking server may be enabled during particular times of day, days of week, telephone status, etc. Based upon the user input, the processing circuitry may also set one or more destination addresses for call bridging (Step 1312). As an example of the operation of Steps 1310 and 1312, a user enables call bridging to a cell phone and selects the PSTN telephone number of the cell phone. The user could also enter a destination IP addresses for call bridging operations. Based upon all the user inputs, the processing circuitry of the bridging computer 102 sets the telephony bridging instructions (Step 1314). From Step 1314, operation ends.

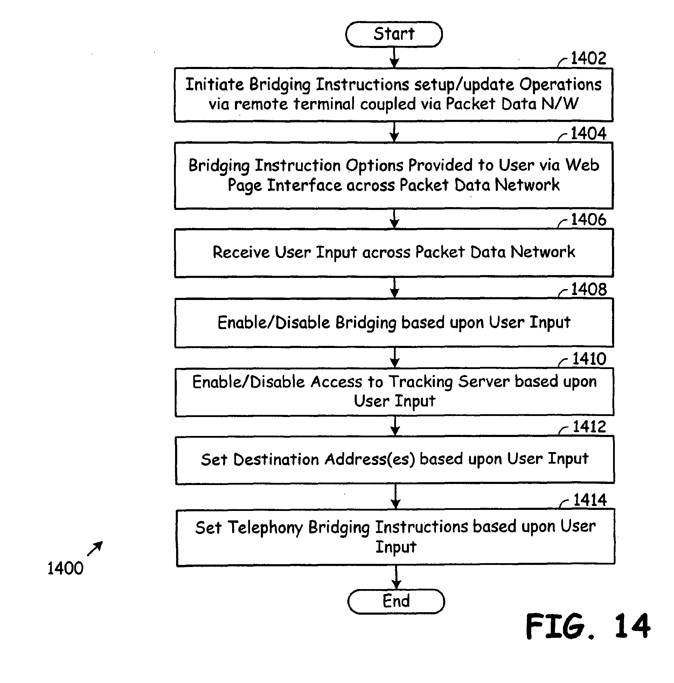

FIG. 14 is a flow chart illustrating remote user terminal bridging setup operations of a telephony bridging computing device constructed in accordance with an embodiment of the present invention. Operations 1400 of FIG. 14 occur when a user initiates setup/update of telephony bridging instructions via a remote terminal (Step 1402). An example of such initiation, with reference to FIG. 1 and to FIG. 14, occurs when computer 122 accesses bridging computer 102 via packet data network 104. In such case, the bridging computer 102 may provide a web page to computer 122 enabling the user of computer 122 to setup the phone 102 for bridging. In an alternate operation of a similar scope, tracking server 120 intervenes and assists in the setup of bridging computer 102 by providing a web page interface to computer 122. In both of these scenarios, the user employs the computer terminal 122 to initiate a session to setup/update the telephony bridging instructions via a user interface of the computer 122 that may be superior to the user interface provided by the bridging computer 102 itself. Generally, a user initiates the operations of Step 1402 by accessing a particular web page from the remote terminal 122. In response to a web page query, the bridging computer 102 may serve a web page to the remote terminal 122. Alternately, the web page interface may be provided by the tracking server 120 or another server that has been established to service such operations.

The bridging computer 102, tracking server 120, or another server then provides bridging options via a web page interface that is transmitted across the packet data network to the remote terminal 122 (Step 1404). When the bridging computer 102 itself supports the web page interface, the bridging computer 102 provides the web page via its packet data network interface. When operating in cooperation with the tracking server 120, the tracking server 120 or other server provides the web page interface to the remote terminal across the packet data network. Then, the bridging computer 102, tracking server 120, or other another server receives user input via the packet data network (Step 1406).

Based upon the user input, the bridging computer 102, tracking server 120 and/or the other server enables, disables, or selectively enables/disables telephony bridging of the bridging computer 102 based upon the user input (Step 1408). Further, based upon the user input, access of the tracking server by the bridging computer 102 may be selectively enabled or disabled (Step 1410). Then, one or more destination addresses are selected based upon the user input (Step 1412). Finally, the telephony bridging instructions for the particular bridging computer 102 that were determined at Steps 1408, 1410, and 1412 are enacted (Step 1414). As has been previously described, the telephony bridging instructions may be stored locally in the bridging computer 102, remotely in a tracking server 120, or both at the bridging computer 102 and the tracking server 120. Depending upon how the telephony bridging instructions are actually stored, the user input will alter the telephony bridging instructions at one or both of the bridging computer 102 and the tracking server 120.

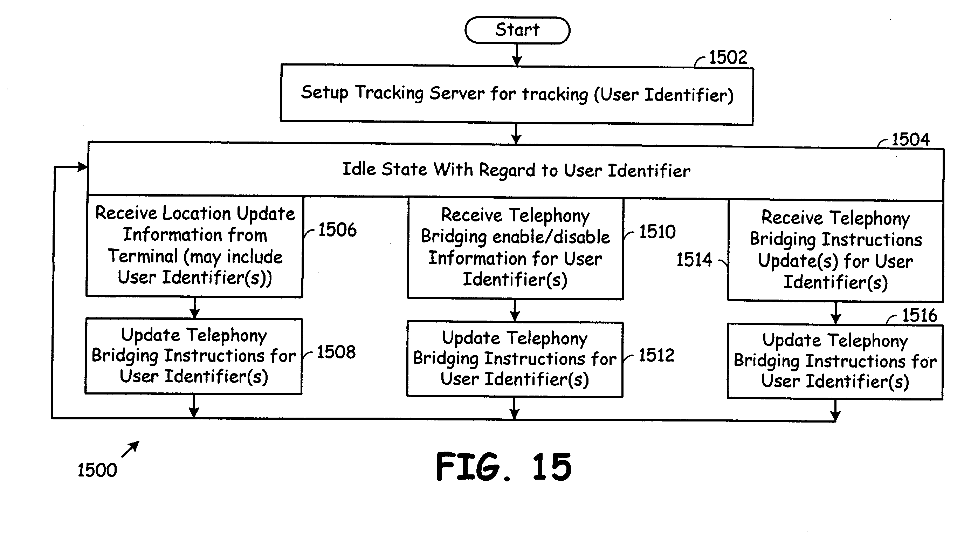

FIG. 15 is a flow chart illustrating tracking server setup/update operations in accordance with an embodiment of the present invention. Operation 1500 commences with the initial setup of the tracking server for the tracking of a user corresponding to one or more particular user identifiers (Step 1502). The user identifier may include simply the handle of a user, i.e., user ID, the handle of a particular user plus a service provider ID handle, both of these plus a device handle, and/or all of these plus a port handle. Thus, a number of differing options may be employed in identifying a particular user based upon a user identifier. Referring to both FIGs. 1 and 15, access of the tracking server 120 may be via a bridging computer 102, a remotely located computer 122, or via another terminal.

Once setup operations are complete, operation proceeds to the idle state (Step 1504). From the idle state, the tracking server may receive location update information corresponding to one or more particular user identifiers (Step 1506). The location update information may include a terminal registration that relates a particular terminal identified by a MAC address to a particular user ID. Location update information may also provide a particular IP address of a terminal associated with a particular user ID or MAC address. For example, after sending an initial message that relates its MAC address to a particular user ID, a VoIP terminal 116 attaches to and is assigned an IP address by the packet data network 108. Upon assignment of the IP address, the VoIP terminal 116 sends a message to tracking server 120 that includes its identity, e.g., handle or MAC address, and the newly assigned IP address. Upon receipt of the updated location information, the tracking server 120 updates the telephony bridging instructions for the affected user identifier(s) (Step 1508).

Any particular terminal (VoIP or PSTN) may be associated with one or more user identifiers. While traveling, for example, two or more persons traveling together may designate one particular terminal or one set of terminals for telephony bridging from their separate bridging computers 102. During initial setup, the user(s) associate this terminal or set of terminals with multiple user identifiers. After setup, when one of these designated terminals updates its location information with the tracking server 120, telephony bridging instructions are updated for each of the affected user identifiers and, therefore, for each affected bridging computer 102 that supports bridging for such users

From the idle state (Step 1504), the tracking server 120 may receive bridging enable/disable/update information for one or more particular user identifiers (Step 1510). A user or owner of a bridging computer 102 operating according to the present invention may selectively enable or disable bridging at any time via interaction with the tracking server 120. Based upon the information received, telephony bridging is enabled or disabled for one or more affected user identifiers (Step 1512).

After initial setup at Step 1504, a user may update telephony bridging information via interaction with the tracking server (Step 1514). Via interaction with the tracking server, a user may associate a new/different terminal for telephony bridging, may remove a terminal for telephony bridging, may associate another/other telephone(s) with his/her user identifier, may disassociate a telephone with his/her user identifier, among other alterations. In response to the user input, the tracking server updates telephony bridging instructions for the particular user identifier (Step 1516). From each of Steps 1508, 1512, and 1516, operation returns to the idle state of Step 1504.

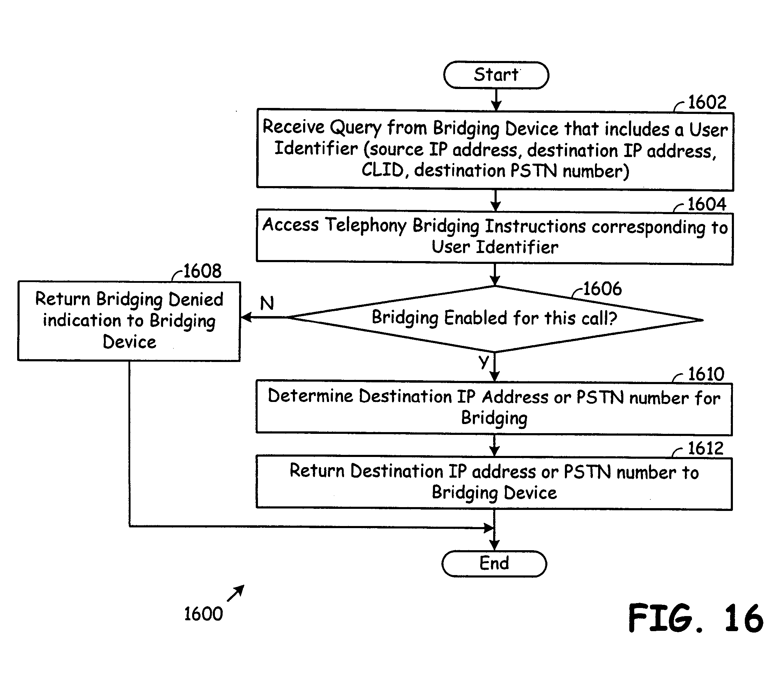

FIG. 16 is a flow chart illustrating tracking server access operations in accordance with an embodiment of the present invention. Operation commences with the tracking server receiving a query from a bridging computer 102, the query including one or more user identifiers (Step 1602). The user identifier includes a user handle and may include one or more of a service provider ID, a device handle, and a port handle. Further, the query may include a source IP address, a destination IP address, a calling line ID, and/or a destination PSTN number of a call that is incoming to the bridging computer 102. In response to this query, the tracking server 120 accesses telephony bridging instructions corresponding to the user identifier or identifiers received in the query (Step 1604). The tracking server then determines whether bridging is enabled for this particular call (Step 1606). As was previously described, bridging may be enabled or disabled for all incoming calls, selectively enabled/disabled based upon the type of incoming call, i.e., PSTN call or VoIP call, or may be selectively enabled/disabled based upon the additional information received with the query. When bridging is not enabled for the particular call, the tracking server 120 returns a bridging denied indication to the bridging computer 102 (Step 1608). In response to this bridging denied query, the bridging computer 102 will either locally terminate the call or deliver the call to voicemail.

When the tracking server determines that bridging is enabled for the particular call, the tracking server 120 determines a destination IP address or PSTN number for bridging of the call (Step 1610). The tracking server 120 then returns to this destination IP address or PSTN number to the bridging computer 102 (Step 1612). From both Steps 1608 and 1610 operation ends.

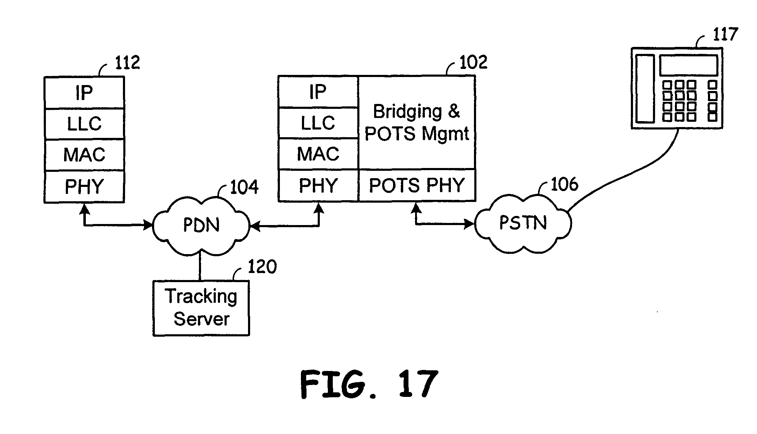

FIG. 17 is a block diagram illustrating protocol stack operations for PSTN/VoIP bridging operations in accordance with an embodiment of the present invention The protocol layers illustrated in FIG. 7 are employed by a bridging computer 102 when bridging between a PSTN telephony format and a VoIP telephony format. For example, a call may be incoming from PSTN phone 117 to the bridging computer 102 via the PSTN 106. In servicing this PSTN call, the bridging computer 102 enables a Plain Old Telephone System (POTS) physical layer and bridging and POTS management resources to convert the call to a format that will interface with an Internet Protocol (IP) layer. When bridging is enabled for the particular call, based upon the telephony bridging instructions of the bridging computer 102, the bridging computer 102 will bridge the PSTN call to a destination VoIP terminal 112. In doing such, the bridging computer 102 will continue to service the POTS PHY and the bridging and POTS management protocol operations and necessary VoIP resources to service VoIP telephony. In servicing VoIP telephony, the bridging computer 102 enables a Physical layer (PHY) corresponding to packet data network 104, a Media Access Control (MAC) layer, Link Layer Control (LLC) layer, and an IP layer to support the VoIP telephony format.

The PHY, MAC, and LLC layers depend upon the structure and operation of the packet data network 104. Examples of these structures and operations have previously been described with reference to FIGs. 1 through 5. The bridging computer 102 interacts with the tracking server 120 via the packet data network 104 using the illustrated protocol stack. Destination VoIP telephone 112 also enables a protocol stack of similar/same structure to support the VoIP call. The protocol layer operations illustrated in FIG. 17 may be employed to bridge a VoIP call incoming from VoIP telephone 112 to PSTN telephone 117.

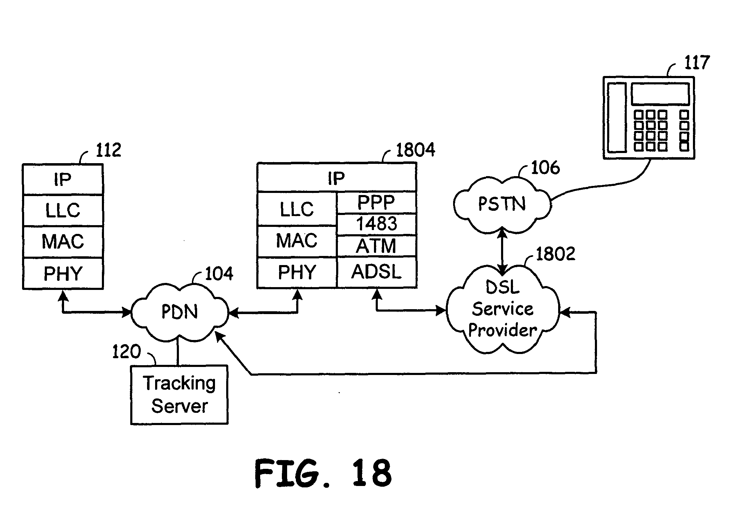

FIG. 18 is a block diagram illustrating protocol stack operations for PSTN/VoIP bridging operations across a DSL link in accordance with an embodiment of the present invention. With the embodiment of FIG. 18, a bridging computer 1804 implements a DSL protocol stack to support communication with PSTN phone 117 via DSL service provider 1802 and the PSTN 106. The construct of bridging computer 1804 may be similar or the same as one of the bridging computers illustrated in FIGs. 6-8. In servicing the DSL interface to the DSL service provider 1802, bridging computer 1804 enables an Asymmetrical Digital Subscriber Line (ADSL) layer, an Asynchronous Transfer Mode (ATM) layer, a 1483 layer, and a Point to Point Protocol (PPP) layer. Further, bridging computer 1804 implements PHY, MAC, LLC, and IP protocol layer operations for interface with the packet data network 104. In an alternate operation, bridging computer 1804 may also communicate with packet data network 104 via DSL service provider 1802 using the protocol stack implemented for the DSL interface.

In bridging a PSTN call to a VoIP call, bridging computer 1804 implements both sides of the protocol stack illustrated with both sides being spanned by an IP protocol layer. VoIP telephone 112 implements the protocol stack illustrated to service the VoIP telephony call. The components illustrated in FIG. 18 are also employed in bridging a VoIP call from VoIP telephone 112 to PSTN telephone 117.

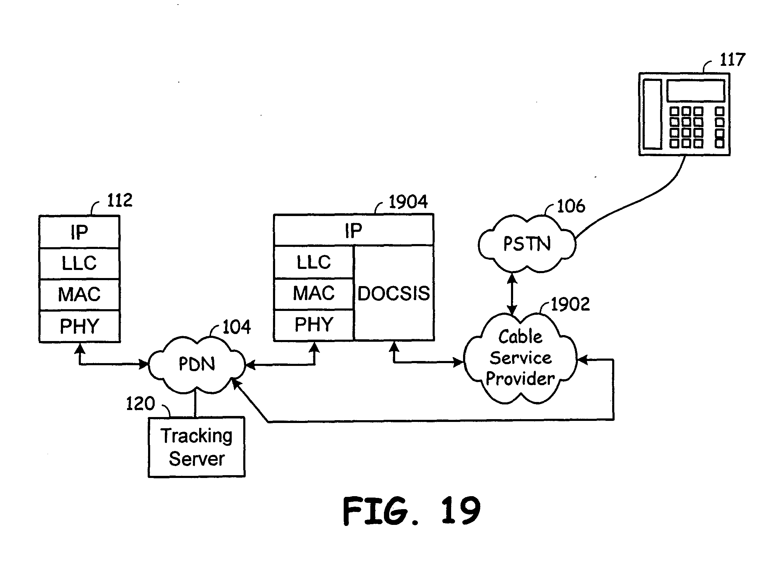

FIG. 19 is a block diagram illustrating protocol stack operations for PSTN/VoIP bridging operations across a DOCSIS cable network link in accordance with an embodiment of the present invention. A bridging computer 1904 supports bridging of calls between the PSTN and the packet data network 104. In the particular example of FIG. 19, bridging computer 1904 supports a cable modem interface to cable service provider 1902 as well as an interface to packet data network 104. Generally, to support the interface to the cable modem network 1902, the bridging computer 1904 supports the Data Over Cable System Interface Specification (DOCSIS) protocol standard. Further, in supporting communications with the packet data network 104, the bridging computer 1904 supports PHY, MAC, and LLC protocol layer operations. IP layer bridges between the DOCSIS protocol stack and the packet data network interface protocol stack. The bridging computer 1904 can also access the packet data network 104 via the DOCSIS protocol stack and the cable service provider 1902.

For PSTN to VoIP bridging and VoIP to BSTN bridging, the bridging computer 1904 supports both the DOCSIS and the PHY/MAC/LLC protocol stacks with transfer between the two via the IP layer. Operations at the IP layer may comprise simply remarking destinations IP addresses or encapsulation of incoming VoIP packets and transmission out of encapsulated VoIP packets.

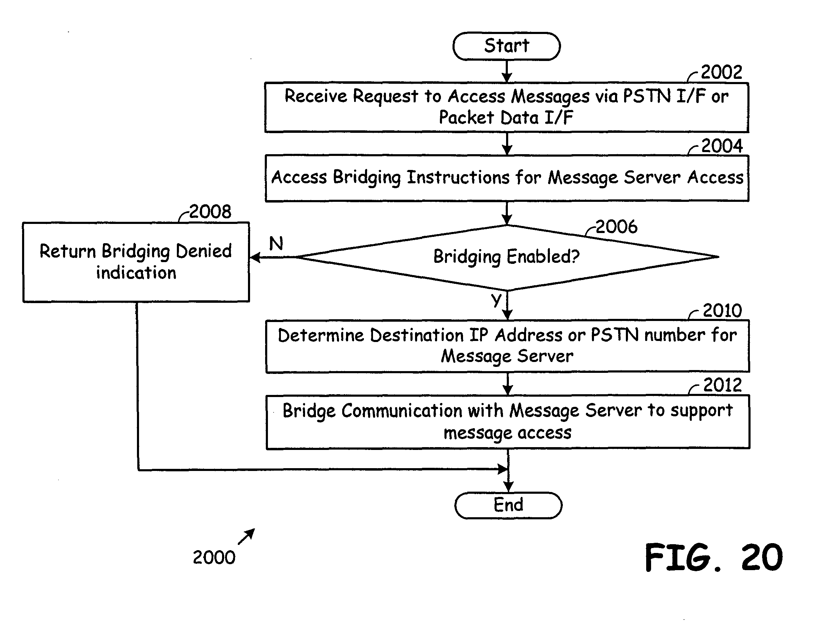

FIG. 20 is a flow chart illustrating message server operations in accordance with an embodiment of the present invention. Operations 2000 of FIG. 20 occur when a bridging computer 102 receives a request to access messages, e.g., voice mail, via the PSTN interface or the packet data network interface of the bridging computer 102 (Step 2002). Such request may arrive as a typical incoming call that is routed to voice mail based upon telephony bridging instructions or as a specific request to access messages. For example, the bridging computer 102 may be setup with a particular PSTN number or IP address that is used only to access messages.

Upon receipt of the call, the bridging computer 102 accesses its telephony bridging instructions locally and/or remotely (Step 2004). The bridging computer 102 then determines whether bridging is enabled for this particular incoming call or message access request (Step 2006). If bridging is not enabled, a return bridging denied indication is provided to the calling terminal (Step 2008). If bridging is enabled for this particular incoming call, the bridging computer 102 determines a destination IP (message server 132) or destination PSTN number (message server 130) (Step 2010). The bridging computer 102 then bridges the call to the message server 130 or 132 to service the message access operations.

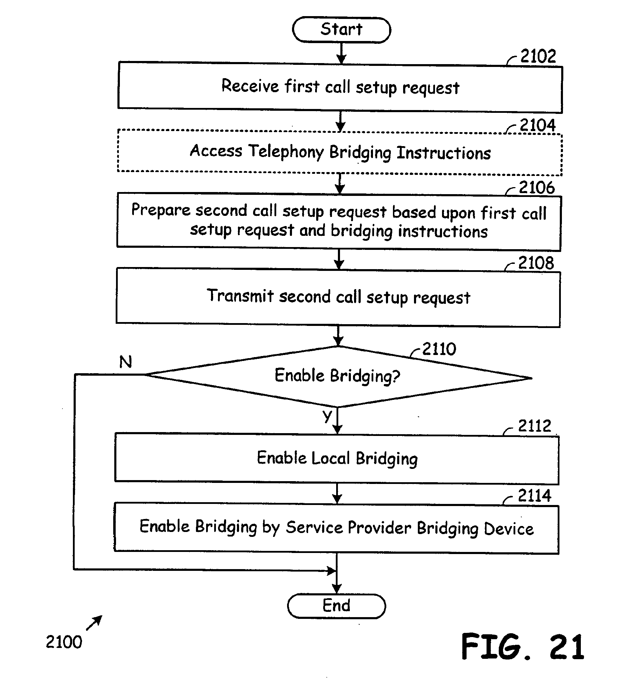

FIG. 21 is a flow chart illustrating call setup operations in accordance with an embodiment of the present invention. Operation 2100 commences with a bridging computer 102 receiving a first call setup request (Step 2102). This call setup request may be received from the PSTN 106 or the packet data network 104. In response to the receipt of the first call setup request, the bridging computer 102 optionally accesses telephony bridging instructions (Step 2104). The telephony bridging instructions may be retrieved from one or more of local memory, a user interface, with the first call setup request, from a tracking server, from a remote computer, otherwise. The bridging computer 102 then selectively prepares a second call setup request based upon the first call setup request (Step 2106). In preparing the second call setup request, the bridging computer 102 may use the retrieved telephony bridging instructions. The bridging computer 102 then transmits the second call setup request to the Internet via packet data network 104 or 108 or to the PSTN 106, depending upon the operation (Step 2108).

The bridging computer 102 then determines whether to enable bridging for a call associated with the first call setup request (Step 2110). If telephony bridging is not enabled for the call, operation ends. However, if telephony bridging is enabled for the call the bridging computer 102 selectively bridges an incoming call relating to the first call setup request. The bridging may be performed locally by the bridging computer 102 (Step 2112) and/or remotely via a service provider bridging device 124 (Step 2114).

Further, in selectively preparing the second call setup request based upon the first call setup request at Step 2106, the bridging computer 102 may employ a called PSTN number, a calling line identifier (CLID) number, a source IP address, and/or a destination IP address relating to the first call setup request.

As one of average skill in the art will appreciate, the term "communicatively coupled", as may be used herein, includes wireless and wired, direct coupling and indirect coupling via another component, element, circuit, or module. As one of average skill in the art will also appreciate, inferred coupling (i.e., where one element is coupled to another element by inference) includes wireless and wired, direct and indirect coupling between two elements in the same manner as "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A computing device for use in bridging a first call between a first telephony device and a second telephony device and a second call from a third telephony device, the computing device comprising:
processing circuitry that operates in both a call bridging mode and a call end-point mode;
a user interface communicatively coupled to the processing circuitry;
a first interface communicatively coupling the processing circuitry to the first telephony device via the Public Switched Telephone Network (PSTN) and pursuant to a first voice format;
a second interface communicatively coupling the processing circuitry to the second telephony device via an Internet network and pursuant to a second voice format;
the processing circuitry, in the call end-point mode, supports the second call by maintaining a first communication pathway between the user interface and the third telephony device; and
the processing circuitry, in the call bridging mode, provides a second communication pathway between the first telephony device and the second telephony device by translating first call information of the first call received via the first interface to the second voice format for delivery to the second telephony device, and translating second call information of the first call received via the second interface to the first voice format for delivery first telephony device.

2. The computing device of claim 1, further comprising memory that stores bridging instructions, and wherein the processing circuitry retrieves and executes the bridging instructions from the memory to support the second communication pathway.

3. The computing device of claim 1, wherein the user interface comprises:
an audio interface;
a mouse interface; and
a keyboard interface.

4. In a telephony infrastructure supporting a call between a first telephony device and a second telephony device, a computing device comprising:
bridging circuitry;
a first interface communicatively coupling the bridging circuitry to the first telephony device via to a public switched telephone network and pursuant to a first voice format;
a second interface communicatively coupling the bridging circuitry to the second telephony device via an Internet network and pursuant to a second voice format; and
the bridging circuitry provides a call pathway between the first telephony device and the second telephony device by translating first call information received via the first interface to the second voice format for delivery to the second telephony device, and by translating second call information received via the second interface to the first voice format for delivery to the first telephony device.

5. The computing device of claim 4, further comprising memory that stores bridging instructions, and the bridging circuitry retrieves and executes the bridging instructions from the memory.

6. A computing device comprising:
a user interface;
processing circuitry communicatively coupled to the user interface;
a first interface communicatively coupling the processing circuitry to the Public Switched Telephone Network (PSTN);
a second interface communicatively coupling the processing circuitry to an Internet network; and
the processing circuitry selectively bridges calls between the first interface and the second interface.

7. The computing device of claim 6, further comprising a local memory that stores bridging instructions, and, in selectively bridging the incoming call, the processing circuitry retrieves and executes the bridging instructions from the local memory.

8. In a telephony infrastructure supporting a call between a first telephony device and a second telephony device, a method performed by a computing device having a first interface and a second interface, the first interface communicatively coupled to a public switched telephone network, the second interface communicatively coupled to an Internet network, the method comprising:
receiving first voice signals in a first voice format generated by the first telephony device via the first interface;
receiving second voice signals in a second voice format generated by the second telephony device via the second interface;
translating the first voice signals received from the first voice format to the second voice format;
translating the second voice signals received from the second voice format to the first voice format;
delivering the first voice signals in the second voice format to the second telephony device via the second interface; and
delivering the second voice signals in the first voice format to the first telephony device.

9. The method of claim 8, wherein translating of the first voice signals and second voice signals together comprising a bridge between the public switched telephone network and the Internet network.

10. The method of claim 8, wherein the first voice format comprises an analog format.
